(19) Europäisches Patentamt
European Patent Office
Office européen des brevets

(11) **EP 4 654 697 A1**

(12) **EUROPEAN PATENT APPLICATION**
published in accordance with Art. 153(4) EPC

(43) Date of publication:
**26.11.2025 Bulletin 2025/48**

(21) Application number: **23916650.7**

(22) Date of filing: **16.01.2023**

(51) International Patent Classification (IPC):
**H04W 72/04** *(2023.01)*

(52) Cooperative Patent Classification (CPC):
**H04W 72/04**

(86) International application number:
**PCT/CN2023/072415**

(87) International publication number:
**WO 2024/152159 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **Mewburn Ellis LLP
Aurora Building
Counterslip
Bristol BS1 6BX (GB)**

(54) **SIDELINK TRANSMISSION METHODS, AND TERMINAL DEVICES**

(57)    Provided are sidelink transmission methods and terminal devices. A method comprises a first terminal device sending first information to a second terminal device, the first information being associated with a first direct communication request (DCR), and the first information being simultaneously transmitted with one or more of the following: a first channel state information reference signal (CSI-RS); and first CSI-RS resource indication information. In the embodiments of the present application, when the first information used for unicast link establishment is transmitted, the first CSI-RS and/or the first CSI-RS resource indication information are transmitted at the same time, so as to mutually combine a unicast link establishment process with a beam selection process. Compared with a serial solution for the unicast link establishment process and the beam selection process, the present application helps to shorten the time required for executing the unicast link establishment process and the beam selection process, thus reducing time delay of sidelink transmission.

```
┌──────────────────┐          ┌──────────────────┐
│   First terminal │          │  Second terminal │
│      device      │          │      device      │
└──────────────────┘          └──────────────────┘
         │      S1410, First information      │
         │───────────────────────────────────▶│
         │                                     │
```

FIG. 14

## Description

## TECHNICAL FIELD

The present disclosure relates to the technical field of communication, and more specifically, to a method for sidelink transmission and a terminal device.

## BACKGROUND

Currently, in order to improve a transmission rate of a sidelink communication system, the employment of millimeter-wave frequency band in the sidelink communication system is taken into consideration. In the sidelink communication system based on the millimeter-wave frequency band, a beam-based transmission manner is usually adopted. In other words, a transmitting end may perform sidelink transmission with a transmit beam, and/or, a receiving end may perform sidelink reception with a receive beam. If the beam-based transmission manner is adopted, a beam selection process usually needs to be performed to select the transmit beam and/or the receive beam for the sidelink transmission before the sidelink transmission. However, in a conventional process of establishing a unicast link, the beam selection process is not taken into consideration. As a result, after the unicast link is successfully established, the transmitting end and the receiving end still fail to perform the sidelink transmission via the unicast link due to the inability to know the transmit beam and/or receive beam for sidelink transmission.

## SUMMARY

The present disclosure provides a method for sidelink transmission and a terminal device. Various aspects involved in the present disclosure are described below.

In a first aspect, a method for sidelink transmission is provided. The method includes transmitting, by a first terminal device, first information to a second terminal device. The first information is associated with a first direct communication request (DCR), and the first information is transmitted simultaneously with one or more of a first channel state information reference signal (CSI-RS) and first CSI-RS resource indication information.

In a second aspect, a method for sidelink transmission is provided. The method includes receiving, by a second terminal device, first information transmitted by a first terminal device. The first information is associated with a first direct communication request (DCR), and the first information is transmitted simultaneously with one or more of a first channel state information reference signal (CSI-RS) and first CSI-RS resource indication information.

In a third aspect, a terminal device is provided. The terminal device is a first terminal device and includes a transmitting unit. The transmitting unit is used for transmitting first information to a second terminal device. The first information is associated with a first direct communication request (DCR), and the first information is transmitted simultaneously with one or more of a first channel state information reference signal (CSI-RS) and first CSI-RS resource indication information.

In a fourth aspect, a terminal device is provided. The terminal device is a second terminal device and includes a receiving unit. The receiving unit is used for receiving first information transmitted by a first terminal device. The first information is associated with a first direct communication request (DCR), and the first information is transmitted simultaneously with one or more of a first channel state information reference signal (CSI-RS) and first CSI-RS resource indication information.

In a fifth aspect, a terminal device including a processor, a memory and a communication interface is provided. The memory is used for storing one or more computer programs, and the processor is used for calling the computer programs in the memory, to cause the terminal device to perform some or all of steps of the methods in various aspects described above.

In a sixth aspect, the embodiments of the present disclosure provide a communication system. The system includes the aforementioned terminal device. In another possible design, the system may further include other devices that interact with the terminal device in the solution provided in the embodiments of the present disclosure.

In a seventh aspect, the embodiments of the present disclosure provide a computer-readable storage medium. The computer-readable storage medium stores a computer program, and the computer program causes a communication device (for example, a terminal device or a network device) to perform some or all of steps of the methods in various aspects described above.

In an eighth aspect, the embodiments of the present disclosure provide a computer program product. The computer program product includes a non-transitory computer-readable storage medium storing a computer program, and the computer program is operable to cause a communication device (for example, a terminal device or a network device) to perform some or all of steps of the methods in various aspects described above. In some implementations, the computer program product may be a software installation package.

In a ninth aspect, the embodiments of the present disclosure provide a chip. The chip includes a memory and a processor. The processor can call and run a computer program from the memory to implement some or all of steps in the methods of various aspects described above.

In the embodiments of the present disclosure, the first information for establishing the unicast link is transmitted simultaneously with the first CSI-RS and/or the first CSI-RS resource indication information. In this way, a process of establishing the unicast link is combined with a beam selection process. Compared with a serial approach for the process of establishing unicast link and the beam selection process, it helps to reduce time required for the process of establishing the unicast link and the beam selection process, thereby reducing a delay of the sidelink transmission.

## BRIEF DESCRIPTION OF THE DRAWINGS

FIG. 1 illustrates a wireless communication system 100 utilized in embodiments of the present disclosure.

FIG. 2 is a diagram illustrating an example scenario of sidelink communication within coverage of a network.

FIG. 3 is a diagram illustrating an example scenario of sidelink communication within partial coverage of a network.

FIG. 4 is a diagram illustrating an example scenario of sidelink communication outside coverage of a network.

FIG. 5 is a diagram illustrating an example scenario of sidelink communication based on a central control node.

FIG. 6 is a schematic diagram of a data transmission manner of sidelink communication.

FIG. 7 is a schematic diagram of another data transmission manner of sidelink communication.

FIGS. 8A and 8B are schematic diagrams illustrating slot structures of sidelink communication.

FIG. 9 is a schematic diagram illustrating a time-frequency resource occupied by sidelink (SL) CSI-RS.

FIG. 10 is a schematic diagram illustrating a scenario of beam-based communication.

FIG. 11 is a schematic diagram illustrating another scenario of beam-based communication.

FIG. 12 is a schematic diagram of an indication manner of transmission configuration indicator (TCI) states available for a downlink data channel.

FIG. 13 is a schematic flowchart of a process of establishing a unicast link applicable to the embodiments of the present disclosure.

FIG. 14 is a schematic flowchart of a method for sidelink transmission in an embodiment of the present disclosure.

FIG. 15 is a schematic flowchart of a method for sidelink transmission in another embodiment of the present disclosure.

FIG. 16 is a schematic diagram of a method for sidelink transmission in another embodiment of the present disclosure.

FIG. 17 is a schematic diagram of a method for sidelink transmission in another embodiment of the present disclosure.

FIG. 18 is a schematic diagram of a terminal device in an embodiment of the present disclosure.

FIG. 19 is a schematic diagram of a terminal device in another embodiment of the present disclosure.

FIG. 20 is a schematic diagram illustrating a structure of a communication apparatus in an embodiment of the present disclosure.

## DETAILED EMBODIMENTS

### Architecture of a communication system

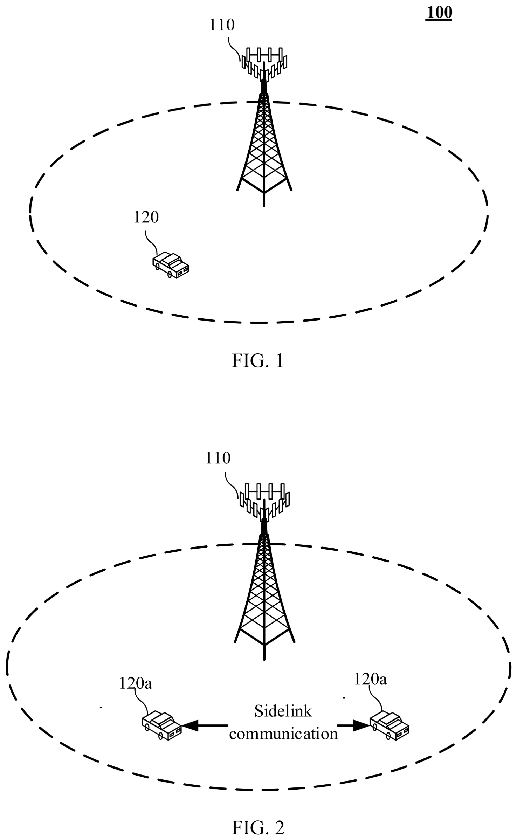

FIG. 1 is a diagram illustrating an example of system architecture of a wireless communication system 100 utilized in embodiments of the present disclosure. The wireless communication system 100 may include a network device 110 and a terminal device 120. The network device 110 may be a device that communicates with the terminal device 120. The network device 110 may provide a communication coverage for a certain geographical area, and may communicate with the terminal device 120 located within a coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located within a network coverage range of the network device 110, or all be located outside the network coverage range of the network device 110, or some may be located within the network coverage range of the network device 110 while the others located outside the network coverage range of the network device 110, which is not limited in the embodiments of the present disclosure.

Optionally, the wireless communication system 100 may further include other network entities such as a network controller and a mobile management entity, which is not limited in the embodiments of the present disclosure.

It shall be understood that technical solutions of the embodiments of the present disclosure may be applied to various communication systems, such as, a 5th generation (5G) system or a new radio (NR) system, a long term evolution (LTE) system, an LTE frequency division duplex (FDD) system, and an LTE time division duplex (TDD) system. The technical solutions provided in the present disclosure may further be applied to future communication systems, such as a 6th generation mobile communication system, and satellite communication system.

The terminal device in the embodiments of the present disclosure may also be referred to as a user equipment (UE), an access terminal, a user unit, a user station, a mobile platform, a mobile station (MS), a mobile terminal (MT), a remote station, a remote terminal device, a mobile device, a user terminal, a wireless communication device, a user agent, or a user apparatus. The terminal device in the embodiments of the present disclosure may refer to a device that provides voice connectivity and/or data connectivity to a user and that may be used to connect a person, an object and a machine, for example, a handheld device or a vehicle-mounted device with a wireless connection function. The terminal device in the embodiments of the present disclosure may be a mobile phone, a tablet personal computer (pad), a laptop computer, a handheld computer, a mobile internet device (MID), a wearable device, a vehicle, a wireless terminal in industrial control, a wireless terminal in self-driving, a wireless terminal in a remote medical surgery, a wireless terminal in a smart grid, a wireless terminal in transportation safety, a wireless terminal in a smart city, or a wireless terminal in a smart home, etc. For example, the terminal device may act as a scheduling entity that provides a sidelink signal between terminal devices in vehicle-to-everything (V2X) communication or device-to-device (D2D) communication, etc. For example, a cellular phone and a car communicate with each other by means of a sidelink signal. Communication between the cellular phone and a smart home device does not require a base station to relay a communication signal. Optionally, the terminal device may be configured to act as the base station.

The network device in the embodiments of the present disclosure may be a device used for communicating with the terminal device, and the network device may also be referred to as an access network device or a radio access network device, for example, the network device may be the base station. The network device in the embodiments of the present disclosure may refer to a radio access network (RAN) node (or device) that connects the terminal device to a wireless network. The base station may broadly cover following various names, or be replaced with the following names such as, a node B (NodeB), an evolved NodeB (eNB), a next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node or the like, or a combination thereof. The base station may also refer to a communication module, a modem or a chip configured to be arranged in the aforementioned device or apparatus. The base station may also be a mobile switching center; a device that performs a function of the base station in a device-to-device (D2D) communication, a V2X communication, and a machine-to-machine (M2M) communication; a network-side device in the 6G network; or a device that performs the function of the base station in the future communication systems. The base stations may support networks of a same access technology or different access technologies. The specific technology and specific device form adopted by the network device are not limited in the embodiments of the present disclosure.

The base station may be fixed or mobile. For example, a helicopter or drone may be configured to act as a mobile base station, and one or more cells may move based on a location of the mobile base station. In other examples, the helicopter or the drone may be configured to function as a device used for communicating with another base station.

In some deployments, the network device in the embodiments of the present disclosure may refer to a CU or a DU. Alternatively, the network device includes the CU and the DU. The gNB may also include an AAU.

The network device and the terminal device may be deployed on land encompassing indoors or outdoors, and in handheld or vehicle-mounted forms. Alternatively, the network device and the terminal device may also be deployed on water. Alternatively, the network device and the terminal device may also be deployed on an aircraft, a balloon and a satellite in the air. Scenarios in which the network device and the terminal device are located are not limited in the embodiments of the present disclosure.

## Sidelink communication under different coverage cases of network

Sidelink communication refers to a communication technology based on a sidelink. The sidelink communication may be, for example, device to device (D2D) communication or vehicle to everything (V2X) communication. In a conventional cellular system, communication data is received or transmitted between the terminal device and the network device, while the sidelink communication supports a direct transmission of communication data between terminal devices. Compared with the traditional cellular communication, the direct transmission of communication data between terminal devices may have higher spectrum efficiency and a lower transmission delay. For example, the sidelink communication technology is adopted in the V2X system.

In the sidelink communication, depending on a coverage case of the network of the terminal device, the sidelink communication may be classified into sidelink communication within coverage of the network, sidelink communication within partial coverage of the network, and sidelink communication outside coverage of the network.

FIG. 2 is a diagram illustrating an example scenario of sidelink communication within coverage of the network. In the scenario shown in FIG. 2, the two terminal devices 120a are within a coverage range of the network device 110. Therefore, the two terminal devices 120a may receive configuration signaling of the network device 110 (the configuration signaling in the present disclosure may also be replaced with configuration information), and determine sidelink configuration according to the configuration signaling of the network device 110. After the two terminal devices 120a have been configured for sidelink, sidelink communication may be performed on the sidelink.

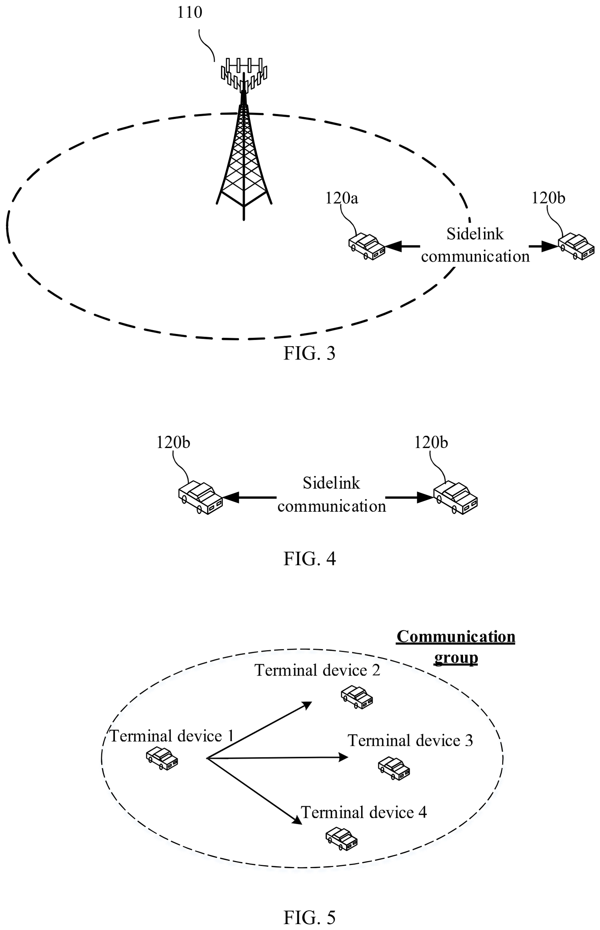

FIG. 3 is a diagram illustrating an example scenario of sidelink communication within partial coverage of the network. In the scenario shown in FIG. 3, the terminal device 120a performs the sidelink communication with the terminal device 120b. The terminal device 120a is located within the coverage range of the network device 110, so that the terminal device 120a may receive the configuration signaling of the network device 110, and determine the sidelink configuration according to the configuration signaling of the network device 110. The terminal device 120b is located outside the network coverage range and is incapable of receiving the configuration signaling of the network device 110. In such a case, the terminal device 120b may determine the sidelink configuration according to pre-configuration information and/or information carried in a physical sidelink broadcast channel (PSBCH) transmitted by the terminal device 120a located within the network coverage range. After both the terminal device 120a and the terminal device 120b have been configured for sidelink, the sidelink communication may be performed on the sidelink.

FIG. 4 is a diagram illustrating an example scenario of sidelink communication outside coverage of the network. In the scenario shown in FIG. 4, the two terminal devices 120b are located outside the network coverage range. In such a case, the two terminal devices 120b may determine the sidelink configuration according to the pre-configured information. After the two terminal devices 120b have been configured for sidelink, the sidelink communication may be performed on the sidelink.

## Sidelink communication based on a central control node

FIG. 5 is a diagram illustrating an example scenario of sidelink communication based on a central control node. In the sidelink communication scenario, multiple terminal devices may constitute a communication group, and the communication group includes the central control node therein. The central control node may be a terminal device in the communication group (e.g., terminal device 1 in FIG. 5), and the terminal device may also be called a cluster header (CH) terminal device. The central control node may be responsible for achieving one or more of the following functions: establishment of the communication group, addition or removal of a group member in the communication group, resource coordination within the communication group, allocation of sidelink transmission resources to other terminal devices, reception of sidelink feedback information from other terminal devices, and resource coordination with other communication groups.

## Mode of sidelink communication

Some standards or protocols (e.g., a 3rd Generation Partnership Project (3GPP)) define two kinds of modes of sidelink communication: a first mode and a second mode.

In the first mode, a resource of the terminal device (the resource mentioned in the present disclosure may also be referred to as a transmission resource, such as a time-frequency resource) are allocated by the network device. The terminal device may transmit data on the sidelink according to the resource allocated by the network device. The network device may allocate a resource for a single transmission to the terminal device, or a resource for a semi-static transmission to the terminal device. The first mode may be applied to a scenario within network device coverage, such as the above scenario shown in FIG. 2. In the scenario shown in FIG. 2, the terminal device 120a is located within the network coverage range of the network device 110, so that the network device 110 may allocate a resource used in a sidelink transmission process to the terminal device 120a.

In the second mode, the terminal device may autonomously select one or more resources from a resource pool (RP). Subsequently, the terminal device may perform the sidelink transmission according to the selected resource(s). For example, in the scenario shown in FIG. 4, the terminal device 120b is located outside a coverage range of a cell. Therefore, the terminal device 120b may autonomously select resource(s) from a preconfigured resource pool to perform the sidelink transmission. Alternatively, in the scenario shown in FIG. 2, the terminal device 120a may also autonomously select one or more resources from a resource pool configured by the network device 110 to perform the sidelink transmission.

## Data transmission manner of sidelink communication

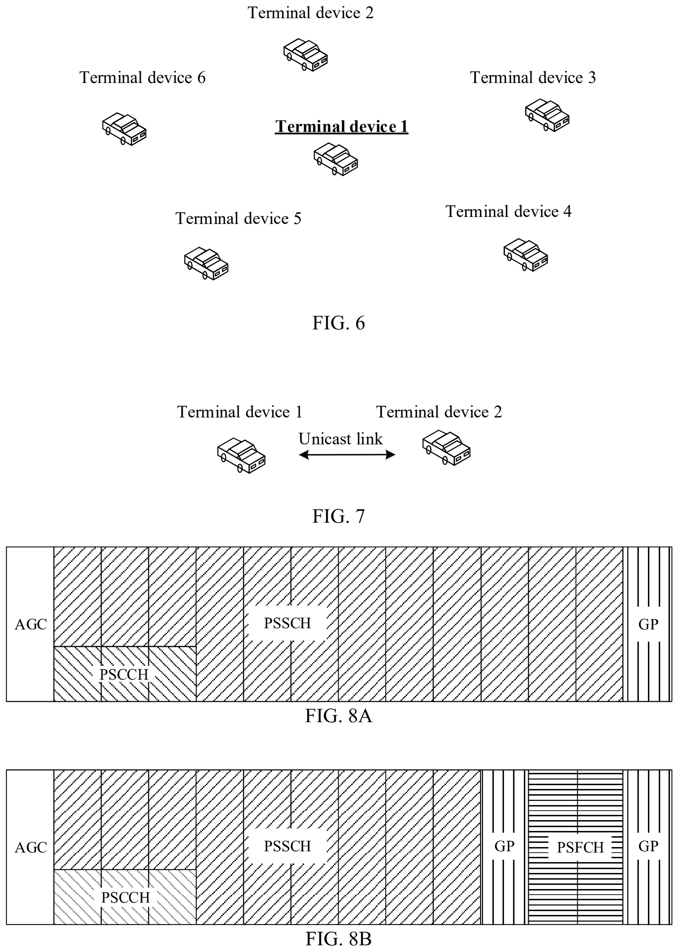

Some sidelink systems (such as long term evolution vehicle to everything (LTE-V2X)) support a broadcast-based data transmission manner (referred to as broadcast transmission for short hereinafter). For the broadcast transmission, a receiver terminal may be any terminal device around a transmitter terminal. Taking FIG. 6 as an example, terminal device 1 is the transmitter terminal, and a receiver terminal corresponding to the transmitter terminal is any one of terminal devices (such as terminal device 2 to terminal device 6 shown in FIG. 6) around the terminal device 1.

In addition to the broadcast transmission, some communication systems also support a unicast-based data transmission manner (referred to as a unicast transmission for short hereinafter) and/or a multicast-based data transmission manner (referred to as multicast transmission for short hereinafter). For example, new radio vehicle to everything (NR-V2X) is expected to support autonomous driving. Autonomous driving places higher demands on data interaction between vehicles. For example, data interaction between vehicles demands higher throughput, lower delay, higher reliability, larger coverage range, a more flexible resource allocation manner. Therefore, the unicast transmission and the multicast transmission are introduced in the NR-V2X in order to enhance data interaction performance between vehicles.

For the unicast transmission, the receiver terminal is generally only one terminal device. Taking FIG. 7 as an example, the unicast transmission is performed between the terminal device 1 and the terminal device 2. The terminal device 1 may be the transmitter terminal and the terminal device 2 may be the receiver terminal. Alternatively, terminal device 1 may be the receiver terminal and terminal device 2 may be the transmitter terminal.

For the multicast transmission, the receiver terminal may be a terminal device in the communication group. Alternatively, the receiver terminal may be a terminal device located within a certain transmission distance. Taking FIG. 5 as an example, the communication group consists of the terminal device 1, the terminal device 2, a terminal device 3 and a terminal device 4. If the terminal device 1 transmits data, all other terminal devices in the group (the terminal device 2 to the terminal device 4) may be the receiver terminals.

## Slot structure of sidelink communication

A frame structure, a subframe structure or a slot structure in the sidelink communication may be defined in the communication system. A plurality of slot structures are defined in some sidelink systems. For example, two slot structures are defined in an NR sidelink (NR SL) system. Referring to FIG. 8A, one of the two slot structures does not include a physical sidelink feedback channel (PSFCH); and referring to FIG. 8B, the other of the two slot structures includes the PSFCH.

In NR SL, a second sidelink symbol of a slot may be a starting position of the physical sidelink control channel (PSCCH) in the time domain, and PSCCH may occupy two or three symbols in the time domain (the symbols mentioned here may all refer to orthogonal frequency division multiplexing (OFDM) symbols). The PSCCH may occupy a plurality of physical resource blocks (PRBs) in the frequency domain. For example, the number of PRBs occupied by the PSCCH may be selected from the following values: {10, 12 15, 20, 25}.

In a general case, in order to reduce complexity of the terminal device performing blind detection on the PSCCH, only one symbol number and one PRB number are configured for the PSCCH in one resource pool. Furthermore, since a sub-channel is defined as a minimum granularity for resource allocation of a physical sidelink shared channel (PSSCH) in the NR SL, the number of PRBs occupied by the PSCCH must be less than or equal to the number of PRBs contained within one sub-channel in the resource pool.

Referring to FIG. 8A, in NR-V2X, for a slot structure not including the PSFCH, a second sidelink symbol of the slot may be a starting position of the PSSCH in the time domain. A last sidelink symbol of the slot is used as a guard period (GP), and remaining symbols may be mapped to the PSSCH. A first sidelink symbol of the slot may be a repetition of the second sidelink symbol. Generally speaking, a terminal device as the receiving side may use the first sidelink symbol as a symbol for automatic gain control (AGC). Therefore, data on the first sidelink symbol is usually not used for data demodulation. The PSSCH may occupy K sub-channels in the frequency domain, and each sub-channel may include M consecutive PRBs (a value of K and a value of M may be predefined in a protocol, pre-configured, or configured by the network device, or depend on an implementation of the terminal device).

FIG. 8B illustrates a slot structure including the PSFCH, and FIG. 8B schematically illustrates positions of symbols occupied by the PSFCH, the PSCCH, and the PSSCH in a slot. The main difference between the slot structure and that of FIG. 8A is that a second to last symbol and a third to last symbol in the slot are used for transmitting the PSFCH, and a symbol before the symbols used for transmitting the PSFCH is also used as a GP. It can be seen from the slot structure illustrated in FIG. 8B that, in the slot, a last symbol is used as a GP, the second to last symbol is used for PSFCH transmission, and data on the third to last symbol is the same as data on the second to last symbol used for PSFCH transmission. That is, the third to last symbol is used as a symbol for AGC, and a fourth to last symbol having a same function as the last symbol is also used as the GP. Furthermore, the first symbol in the slot is used as AGC, and data on the first symbol is the same as data on the second symbol in the slot. The PSCCH occupies 3 symbols, and the remaining symbols may be used for PSSCH transmission.

## Sidelink channel state information reference signal (SL CSI-RS)

To better support the unicast communication, the NR SL system supports a SL CSI-RS. It is stipulated that the SL CSI-RS is transmitted only when the following three conditions are met in the NR SL system.

First condition: the terminal device is required to transmit a PSSCH corresponding to the SL CSI-RS, that is, the terminal device cannot transmit the SL CSI-RS only.

Second condition: sidelink channel state information (CSI) reporting is activated via high-level signaling.

Third condition: in a case where the sidelink CSI reporting is activated via the high-level signaling, a corresponding bit in second-stage sidelink control information (SCI) transmitted by the terminal device triggers the sidelink CSI reporting.

The maximum number of ports supported by the SL CSI-RS is two. In a case where two ports are configured, SL CSI-RSs of different ports are multiplexed on two adjacent resource elements (REs) of a same sidelink symbol in a code division manner. A number of a respective SL CSI-RS of each port in a PRB is 1, i.e., with density being 1. Therefore, within a PRB, the SL CSI-RS will appear on at most one sidelink symbol, and a specific position of the sidelink symbol is determined by the terminal device transmitting the SL CSI-RS.

Generally, in order to avoid affecting resource mapping of the PSCCH and the second-stage SCI, the SL CSI-RS cannot be located in a same sidelink symbol as the PSCCH and the second-stage SCI.

Furthermore, since channel estimation accuracy of a sidelink symbol where a PSSCH demodulation reference signal (DMRS) is located is relatively high, and the SL CSI-RSs of the two ports shall need to occupy two consecutive REs in the frequency domain, the SL CSI-RS and the PSSCH DMRS cannot be transmitted on a same sidelink symbol.

In some cases, a position of the sidelink symbol occupied by the SL CSI-RS may be indicated by a sl-CSI-RS-FirstSymbol parameter in PC5 radio resource control (RRC). Furthermore, a position of a first RE occupied by the SL CSI-RS within a PRB is indicated by a "sl-CSI-RS-FreqAllocation" parameter in the PC5 RRC. If the SL CSI-RS corresponds to a port, the parameter is a bitmap with a length of 12 bits corresponding to 12 REs in the PRB. If the SL CSI-RS corresponds to two ports, the parameter is a bitmap with a length of 6 bits, and in this case, the SL CSI-RS occupies two REs that are $2f(1)$ and $2f(1)+1$, where $f(1)$ indicates an identifier of a bit with a value of 1 in the above bitmap.

A frequency-domain position occupied by the SL CSI-RS is also determined by the terminal device transmitting the SL CSI-RS, and it shall be noted that a determined frequency-domain position of the SL CSI-RS cannot conflict with a frequency-domain position occupied by a phase-tracking RS (PT-RS).

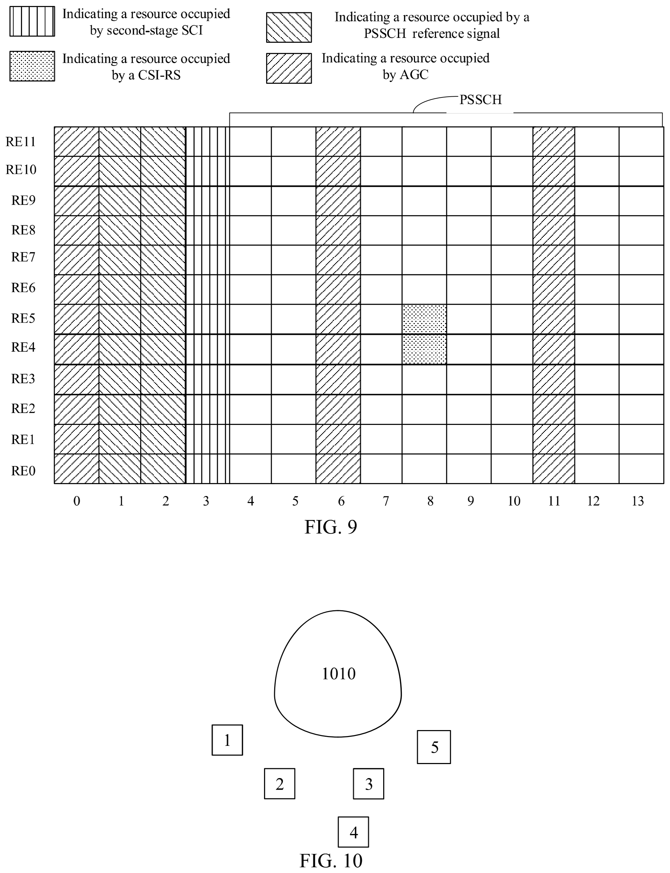

FIG. 9 is a schematic diagram illustrating a time-frequency resource occupied by the SL CSI-RS. Referring to FIG. 9, assuming that the number of ports corresponding to the SL CSI-RS is two, sl-CSI-RS-FirstSymbol indicates position 8 of the sidelink symbol occupied by the SL CSI-RS, and sl-CSI-RS-FreqAllocation indicates that a position of a first RE occupied by the SL CSI-RS within one PRB is $[b_5,b_4,b_3,b_2,b_1,b_0] = [0,0,0,1,0,0]$.

## Multi-beam system

A design goal of the communication system (e.g., NR) includes large-bandwidth communication in a high-frequency band (e.g., a frequency band above 6 GHz). In a case where operating frequency becomes higher, path loss during transmission will increase, thus affecting a coverage capability of a high-frequency system. Therefore, in order to effectively ensure a coverage range of the high-frequency band, an effective technical solution is based on a massive antenna array (massive multiple-in multiple-out, massive MIMO) so as to form a shaped beam with a greater gain, overcome propagation loss, and ensure a coverage range of the communication system.

Currently, the most common massive antenna array is a millimeter-wave antenna array. Since a wavelength emitted by the millimeter-wave antenna array is relatively short, spacing between antenna elements of the antenna array may be relatively small. An aperture of the antenna element may be relatively small, so that more physical antenna elements may be integrated into a two-dimensional antenna array with a limited size.

Furthermore, due to the limited size of the millimeter-wave antenna array, digital beamforming cannot employed in consideration of factors such as hardware complexity, cost overhead, and power consumption. Instead, analog beamforming is usually employed, which may enhance coverage of the network while reducing implementation complexity of a device.

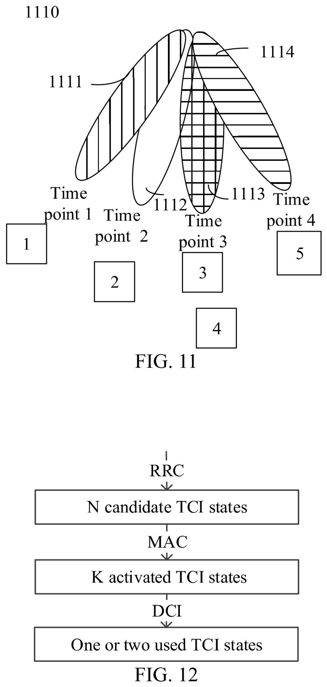

For ease of understanding of the multi-beam system, by taking a scenario of communication between the network device and the terminal as an example, a communication process based on beam communication will be described below with reference to FIGS. 10 and 11.

Referring to FIG. 10, in a conventional communication system (e.g., a 2G, 3G or 4G system), a wide beam 1010 is generally employed to cover an entire cell (or "sector"). In this way, terminals in the cell (e.g., terminal devices 1 to 5) may communicate with the network device via the wide beam at each time point, for example, to obtain transmission resources allocated by the network device.

Referring to FIG. 11, in a newer communication system (e.g., 5G system or NR system), a multi-beam system 1110 may be employed to cover the entire cell. In other words, each beam in the multi-beam system (e.g., a beam 1111 to a beam 1114) covers a small area in the cell, and the effect of multiple beams covering the entire cell is achieved in a beam sweeping manner.

During a process of beam sweeping, different beams are utilized at different time points to cover different areas within the cell. For example, at a time point 1, the communication system may cover an area where a terminal device 1 is located with a beam 1111. At a time point 2, the communication system may cover an area where a terminal device 2 is located with a beam 1112. At a time point 3, the communication system may cover an area where a terminal device 3 and a terminal device 4 are located with a beam 1113. At a time point 4, the communication system may cover an area where a terminal device 5 is located with a beam 1114.

For the multi-beam system, transmitted energy may be more focused by utilizing a narrow beam, and thus a farther distance will be covered. However, because the beam is relatively narrow, each beam may only cover partial area within the cell. Therefore, the multi-beam system may be understood as "trading time for space."

Analog beamforming may be employed not only in the network device but also in the terminal device. Furthermore, analog beamforming may be employed not only for transmitting a signal (called a transmit beam), but also for receiving a signal (called a receive beam).

Currently, different beams are identified by different signals associated with (or carried in) these beams. For example, different synchronization signal and physical broadcast channel (PBCH) blocks (SSBs) are transmitted on some different beams, and the terminal device may distinguish different beams through different SSBs. For another example, different CSI-RSs are transmitted on some different beams, and the terminal device may identify different beams through CSI-RS signals and/or CSI-RS resources.

In a multi-beam system, a physical downlink control channel (PDCCH) and a physical downlink shared channel (PDSCH) may be transmitted via different downlink transmit beams.

For some communication systems (such as communication systems with carrier frequencies below 6 GHz), an analog beam is not usually utilized by the terminal device. In such communication systems, the terminal device may employ an omni-direction antenna (or a nearly omni-direction antenna) to receive signals transmitted by different downlink transmit beams of the network device.

For some communication systems (such as millimeter wave systems), the analog beam may be utilized by the terminal device. In such communication systems, the terminal device may utilize a downlink receive beam to receive a signal transmitted via a corresponding downlink transmit beam. In this case, beam indication information may be used to assist the terminal device in determining one or more of the following information: relevant information of the transmit beam of the network device, and relevant information of the receive beam corresponding to the terminal device.

In some communication systems (such as NR-related protocols), the beam itself is not indicated by the beam indication information directly, but is indicated by quasi co-located (QCL) between signals. At the terminal device side, a determination of receiving a corresponding channel/signal is also based on a QCL assumption.

## QCL indication/assumption of downlink transmission

To enhance a receiving performance, when receiving a signal, the terminal device may improve a receiving algorithm by utilizing a characteristic of transmission environment corresponding to data transmission. For example, a design and parameter of a channel estimator may be optimized by the terminal device utilizing a statistical characteristic of the channel. In some communication systems (e.g., an NR system), the characteristic of the transmission environment corresponding to the data transmission may be represented by QCL information (QCL-Info).

When different transmission and receiving points (TRP)/panels/beams are utilized for a downlink data transmission, the characteristic of the transmission environment corresponding to the data transmission may also change. Therefore, in some communication systems (e.g., the NR system), in a case where a downlink control channel or a downlink data channel needs to be transmitted, the network device may indicate corresponding QCL information to the terminal device through a transmission configuration indicator (TCI) state.

One TCI state may include following configuration information: TCI state identity (ID), QCL information 1, and QCL information 2 (optional). The TCI state ID may be used to identify the TCI state.

The QCL information may include following information: QCL type configuration and QCL reference signal configuration. The QCL type configuration may be one of QCL-Type A, QCL-Type B, QCL-Type C and QCL-Type D. The QCL reference signal configuration may include a cell identifier (cell ID) where a reference signal is located, a bandwidth part (BWP), and an identifier of the reference signal (such as a CSI-RS resource identifier or an SSB index).

If both the QCL information 1 and the QCL information 2 are configured, a QCL type of at least one of the QCL information 1 and the QCL information 2 must be one of the QCL-Type A, the QCL-Type B and the QCL-Type C, and a QCL type of the other QCL information must be the QCL-Type D.

Different QCL type configurations are defined as follows.

> QCL-Type A: {Doppler shift, Doppler spread, average delay, delay spread}
> QCL Type B: {Doppler shift, Doppler spread}
> QCL Type C: {Doppler shift, average delay}
> QCL Type D: {spatial reception parameter}.

In the NR system, the network device may indicate a corresponding TCI state for the downlink signal or the downlink channel. If the network device configures, through the TCI state, a QCL reference signal of a target downlink channel or a target downlink signal as the SSB or the CSI-RS, and the QCL type configuration is the QCL-Type A, the QCL-Type B or the QCL-Type C, the terminal device may assume that a large-scale parameter of the target downlink signal is the same as that of the SSB or CSI-RS. Specific content of the large-scale parameter may be determined based on the QCL type configuration.

Similarly, if the network device configures, through the TCI state, the QCL reference signal of the target downlink channel or the downlink signal as the SSB or the CSI-RS, and the QCL type configuration is the QCL-Type D, the terminal device may utilize a same receiving beam as that for receiving the SSB or the CSI-RS (i.e., a same spatial receiving parameter (spatial Rx parameter)) to receive the target downlink signal. Generally speaking, at the network device side, the target downlink channel (or the target downlink signal) and the SSB or the CSI-RS to which the target downlink channel refers may be transmitted via a same TRP/panel/beam. If TRPs/panels/beams for transmitting two downlink signals (or downlink channels) are different, different TCI states are usually configured for the two downlink signals (or downlink channels).

For a downlink control channel, a TCI state of a CORESET corresponding to the downlink control channel may be indicated by RRC signaling or the combination of RC signaling and MAC signaling.

For the downlink data channel (i.e., PDSCH), referring to FIG. 12, a set of TCI states available for the downlink data channel may be indicated by RRC signaling, and some of the TCI states may be activated by MAC layer signaling. Finally, one or two TCI states are indicated from the activated TCI states through a TCI state indication domain in the DCI for a downlink data channel scheduled by the DCI.

In order to enhance the transmission rate of the sidelink system, it is possible to consider adopting a beam-based transmission manner in the sidelink system. For example, the sidelink system may be extended to the millimeter-wave frequency band, and then analog beamforming may be employed for sidelink transmission to enhance the transmission rate and coverage of the network in the sidelink system.

If the beam-based transmission manner is employed in the sidelink system, the terminal device as the transmission side may perform the sidelink transmission based on the transmit beam; and/or, the terminal device as the receiver may perform the sidelink reception based on the receive beam. In some cases, the aforementioned transmit beam may also be called a spatial domain transmission filter, a spatial domain transmission filter at the transmitting end, a spatial domain transmission filter for transmitting, or other names. Correspondingly, the aforementioned receive beam may also be called a spatial domain reception filter, a spatial domain transmission filter at the receiving end, a spatial domain transmission filter for receiving, or other names. In other cases, the aforementioned transmit beam may also be referred to as a spatial domain transmission parameter, and correspondingly, the aforementioned receive beam may also be referred to as a spatial domain reception parameter. For ease of understanding, the embodiments of the present disclosure are mainly described by taking transmit beam/receive beam as an example. The transmit beam, the spatial domain transmission filter or the spatial domain transmit parameter may be used interchangeably, and the receive beam, the spatial domain reception filter or the spatial domain reception parameter may be used interchangeably.

**Process of establishing a unicast link**

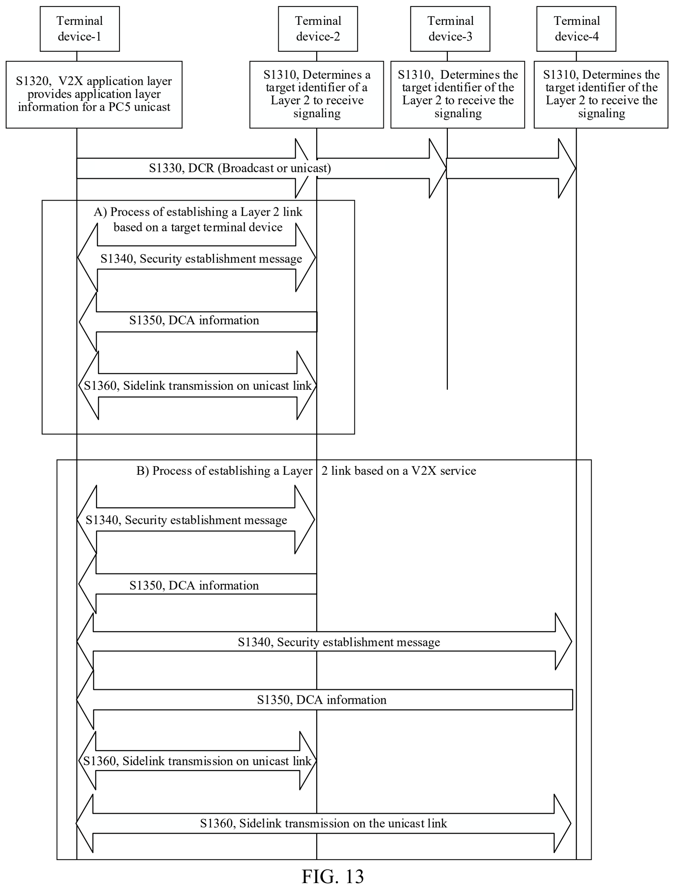

FIG. 13 illustrates a process of establishing a unicast link to which embodiments of the present disclosure is applicable. Referring to FIG. 13, in S1310, a terminal device-2, a terminal device-3 and a terminal device-4 determine a target identifier of a Layer 2 based on an identifier of an application layer in V2X.

In S1320, for a terminal device-1, in addition to an identifier of its own application layer, an identifier of an application layer of a target terminal device may be provided by the application layer. Therefore, the terminal device-1 may transmit the identifier of the application layer, V2X service information and security-related content through a direct communication request (DCR).

In step S1330, if a receiving terminal device knows the identifier of the application layer and an identifier of Layer 2 of the target terminal device in advance, the DCR may be transmitted in a unicast manner; otherwise, the DCR may be transmitted in a broadcast manner.

If the DCR contains the identifier of the application layer of the target terminal device therein, only the target terminal device shall make a response. If the identifier of the application layer of the target terminal device is not contained in the DCR, more than one terminal device shall make responses. For example, in a case where the terminal device-2 and the terminal device-4 are interested in a V2X service contained in the DCR, both the terminal device-2 and the terminal device-4 may response to the DCR. In this case, the terminal device-1 will establish Layer 2 connections with the terminal device-2 and the terminal device-4 respectively.

In step S1340, a security establishment message is transmitted between the terminal device-1 and the target terminal.

Referring to scenario A in FIG. 13, if a PC5 security function is successfully activated during a Layer 2 establishment process based on the target terminal device, the terminal device-1 may inform the terminal device-2 of QoS flows expected to be established and their QoS parameters.

Referring to scenario B in FIG. 13, if the PC5 security function is successfully activated during a Layer 2 establishment process based on V2X services, the terminal device-1 may inform terminal device-2 and terminal device-4 of QoS flows expected to be established and their QoS parameters.

If the DCR is transmitted in the broadcast manner, the terminal device-1 obtains the identifier of the Layer 2 of the target terminal device.

In step S1350, the target terminal device transmits direct communication accept (DCA) to the terminal device- 1.

In some embodiments, the DCA may include information of a terminal device at source-side (terminal device-1), such as an identifier of an application layer, QoS flow(s) and its(their) QoS parameter(s), and a IP address. At this point, a unicast link of the V2X layer has been established.

In step S1360, the sidelink transmission is performed between the terminal device-1 and the target terminal device on the unicast link.

Currently, in order to improve a transmission rate of a sidelink communication system, the employment of millimeter-wave frequency band in the sidelink communication system is taken into consideration. In the sidelink communication system based on the millimeter-wave frequency band, a beam-based transmission manner is usually adopted. In other words, a transmitting end may perform sidelink transmission with a transmit beam, and/or, a receiving end may perform sidelink reception with a receive beam. If the beam-based transmission manner is adopted, a beam selection process usually needs to be performed to select the transmit beam and/or the receive beam for the sidelink transmission before the sidelink transmission. However, based on the description above, it can be understood that the beam selection process is not taken into consideration in the conventional process of establishing the unicast link. As a result, after the unicast link is successfully established, the transmitting end and the receiving end still fail to perform the sidelink transmission via the unicast link due to the inability to know the transmit beam and/or receive beam.

The applicant believes that, in order to solve the above problems, based on the understanding of the process of establishing the conventional unicast link and the beam selection process by those skilled in the art, the beam selection process is usually performed after a successful establishment of the unicast link. In other words, before the establishment of the unicast link, signaling for establishing the unicast link is usually transmitted in the beam sweeping manner since a target beam is not selected. The beam selection process is performed to select the target beam after the unicast link is established. This scheme of serializing the unicast link establishment process and the beam selection process will increase the delay of sidelink transmission.

For example, in the aforementioned serial scheme, since the target beam cannot be determined, the beam sweeping manner would be adopted in the process of transmitting signaling for establishing the unicast link and the beam selection. However, the beam sweeping manner requires beam patrol of a plurality of transmit beams at the transmitting end, which is relatively time-consuming and results in increased delay of sidelink transmission.

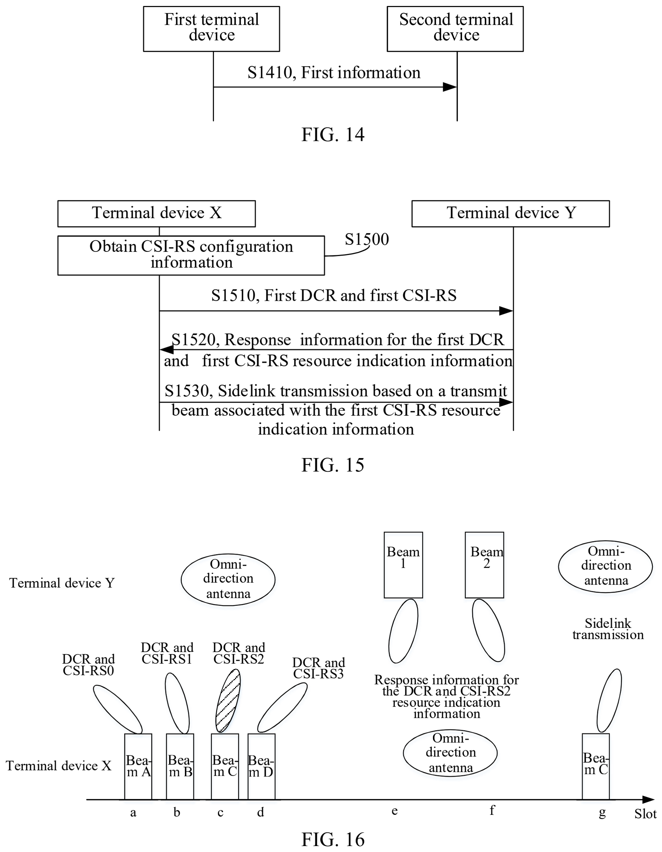

Therefore, the embodiments of the present disclosure provide a method for sidelink transmission. The first CSI-RS and/or the first CSI-RS resource indication information are simultaneously transmitted when the first information for establishing the unicast link is transmitted, so as to combine the process of establishing the unicast link with the beam selection process. Compared with the serial manner described above, it helps to reduce the time required for performing the process of establishing the unicast link and the beam selection process, to reduce the delay of the sidelink transmission. For ease of understanding, the method for sidelink transmission in the embodiments of the present disclosure is described below in conjunction with FIG. 14.

FIG. 14 is a schematic flowchart of a method for sidelink transmission according to embodiments of the present disclosure. The method shown in FIG. 14 includes step S1410.

In step S1410, a first terminal device transmits first information to a second terminal device.

In some implementations, the first information may be used for establishing a unicast link between the first terminal device and the second terminal device. In other words, the first information may be one or more types of information in a process of establishing the unicast link, which is not limited in the embodiments of the present disclosure.

In some implementations, the first information may be associated with a first direct communication request (DCR). For example, the first information may include the first DCR. For another example, the first information may include response information for the first DCR. The response information for the first DCR may include direct communication accept and/or direct communication reject, etc., which is not limited in the embodiments of the present disclosure.

It shall be noted that the first terminal device and the second terminal device may have different meanings in different transmission processes. For example, in transmission process 1 described hereafter in conjunction with step S1510, the first information is the first DCR, the first terminal device is a transmitting device of the first DCR, and accordingly, the second terminal device is a receiving device of the first DCR. In such a case, when transmitting the response information for the first DCR, the second terminal device is a transmitting device of the response information for the first DCR, and accordingly, the first terminal device is a receiving device of the response information for the first DCR.

For another example, in transmission process 2 described hereafter in conjunction with step S1520, the first information is the response information for the first DCR, the first terminal device is the transmitting device of the response information for the first DCR, and accordingly, the second terminal device is the receiving device of the response information for the first DCR. In such a case, when transmitting the first DCR, the transmitting device of the first DCR may be the second terminal device, and accordingly, the receiving device of the first DCR may be the first terminal device.

For ease of description, the following takes terminal device X and terminal device Y as an example for introduction. In a process of transmitting the first DCR, the terminal device X may be the transmitting device of the first DCR. For example, the terminal device X may include the first terminal device in the transmission process 1. For another example, the terminal device X may include the second terminal device in the transmission process 2. Accordingly, in the process of transmitting the first DCR, the terminal device Y may be the receiving device of the first DCR. For example, the terminal device Y may include the second terminal device in the transmission process 1. For another example, the terminal device Y may include the first terminal device in the transmission process 2.

The meaning of the first information is described above, and a transmission manner of the first information will be described below. In some implementations, the first information may be transmitted simultaneously with one or more of a first CSI-RS, and first CSI-RS resource indication information.

In the embodiments of the present disclosure, no limitation is imposed on a combination manner of the aforementioned information transmitted simultaneously. For example, in a case where the first information is the first DCR, the first information may be transmitted simultaneously with the first CSI-RS, which will be described below in conjunction with step S1510. For another example, in a case where the first information is the first DCR, the first information, the first CSI-RS, and the first CSI-RS resource indication information may be transmitted simultaneously, which will be described below in conjunction with step S1510. For another example, in a case where the first information is the response information for the first DCR, the first information may be transmitted simultaneously with the first CSI-RS resource indication information, which will be described below in conjunction with step S1520.

The transmission manner of the first information in a case where the first information is the first DCR or the first information is the response information for the first DCR will be described below in conjunction with step S1510 and step S1520, respectively. For ease of understanding, FIG. 15 is a schematic flowchart of a method for sidelink transmission according to another embodiment of the present disclosure.

In step S1510, the first information is the first DCR. Accordingly, terminal device X simultaneously transmits the first DCR and the first CSI-RS to terminal device Y.

In some implementations, the first CSI-RS is used for the terminal device Y to determine a transmit beam. In other words, the first CSI-RS is used for the terminal device Y to determine a transmit beam of the terminal device X.

For example, the terminal device X may simultaneously transmit the first DCR and the first CSI-RS to the terminal device Y by transmitting the beam 1. Accordingly, the terminal device Y may determine the transmit beam 1 of the terminal device X based on the received first CSI-RS while receiving the first DCR.

In some implementations, the simultaneous transmission of the first DCR and the first CSI-RS may be understood as the first DCR and the first CSI-RS being transmitted via a same sidelink channel. For example, both the first DCR and the first CSI-RS are carried in PSSCH1 (also called "first PSSCH").

In some implementations, the first DCR and the first CSI-RS may be transmitted by the terminal device X based on a first transmit beam. In this case, the first CSI-RS is associated with the first transmit beam.

In some implementations, the first DCR is one of A DCRs transmitted by the terminal device X, and the A DCRs may be transmitted by the terminal device X based on A transmit beams, where A is an integer greater than or equal to 1.

In the embodiments of the present disclosure, the A transmit beams may be different transmit beams, or in other words, all transmit beams of the A transmit beams are different. Surely, in the embodiments of the present disclosure, the A transmit beams may not be same transmit beams, or in other words, at least some of the A transmit beams are different.

In some implementations, in a case where the A transmit beams are different transmit beams, the terminal device X may transmit the A DCRs in a beam sweeping manner. Surely, the terminal device X may also transmit the A DCRs in other manners, which is not limited in the embodiments of the present disclosure.

Furthermore, in the embodiments of the present disclosure, the A transmit beams may be all transmit beams supported by the terminal device X. Surely, the A transmit beams may be some of all transmit beams supported by the terminal device X, which is not limited in the embodiments of the present disclosure.

As described above, in some scenarios, the terminal device X also transmits the first CSI-RS to terminal device Y via the first transmit beam while transmitting the first DCR. In order to facilitate the terminal device Y to perform a subsequent selection of the transmit beam of the terminal device X based on the first CSI-RS, the terminal device X may further transmit the first CSI-RS resource indication information to the terminal device Y, so as to indicate the first CSI-RS transmitted via the first transmit beam.

In some implementations, the first CSI-RS resource indication information is used for indicating the first CSI-RS resource, and the first CSI-RS resource is associated with the first CSI-RS. In other words, the first CSI-RS resource indication information is used for indicating the transmit beam of the terminal device X through the first CSI-RS. Alternatively, in other words, the first CSI-RS resource indication information is used by the terminal device Y to determine the transmit beam.

The implementations of the first CSI-RS resource indication information are not limited in the embodiments of the present disclosure. For example, the first CSI-RS resource indication information may include index information of the first CSI-RS. The index information of the first CSI-RS may be used for indicating an index of the first CSI-RS in a set of CSI-RS resources. In other words, the first CSI-RS and a corresponding transmission resource may be determined based on the index information of the first CSI-RS. For another example, the first CSI-RS resource indication information may include information of indicating the first CSI-RS resource.

The meaning of the first CSI-RS resource indication information in the embodiments of the present disclosure is described above, and a transmission manner of the first CSI-RS resource indication information in the embodiments of the present disclosure will be described below.

In some implementations, the first CSI-RS resource indication information may be transmitted via a sidelink channel that is different from a sidelink channel (e.g., the PSSCH1) carrying the first CSI-RS and the first DCR. For example, the first CSI-RS resource indication information may be carried in a PSCCH associated with the PSSCH1.

In some other implementations, the first CSI-RS resource indication information may be transmitted simultaneously with both the first DCR and the first CSI-RS. In other words, the first CSI-RS resource indication information may be transmitted via a same sidelink channel as the first DCR and the first CSI-RS. For example, the first CSI-RS resource indication information, the first DCR, and the first CSI-RS are all carried in the PSSCH1.

In terms of a type of signaling carrying the first CSI-RS resource indication information, in some implementations, the first CSI-RS resource indication information may be carried in a medium access control control element (MAC CE). In some other implementations, the first CSI-RS resource indication information may be carried in SCI. The SCI may include first-stage SCI and/or second-stage SCI.

For example, in a case where the first DCR and the first CSI-RS are carried in the PSSCH1, the first CSI-RS resource indication information may be carried in SCI associated with the PSSCH1. For example, the first CSI-RS resource indication information is carried in the first-stage SCI, the SCI associated with the PSSCH1 may be understood as SCI in a PSCCH associated with the PSSCH1. For example, the first CSI-RS resource indication information is carried in the second-stage SCI, the SCI associated with the PSSCH1 may be understood as SCI carried in the PSSCH1.

The transmission manner of the first DCR in the embodiments of the present disclosure is described above, and a receiving manner of the first DCR in the embodiments of the present disclosure will be described below. It shall be noted that the first DCR and the first CSI-RS are transmitted simultaneously in some scenarios, and thus, the receiving manner of the first DCR may also be understood as the receiving manner of the first CSI-RS.

In some implementations, the first DCR may be received based on one of a fixed receive beam; a plurality of receive beams of the terminal device Y; and an omni-direction antenna.

For example, the first DCR is received based on the fixed receive beam. In some implementations, the fixed receive beam may be one of N receive beams supported by the terminal device Y, where N is a positive integer greater than or equal to 1.

For example, the first DCR is received based on the plurality of receive beams of the terminal device Y. In some implementations, the plurality of receive beams may be different receive beams. In other words, all receive beams in the plurality of receive beams are different. Surely, in the embodiments of the present disclosure, the plurality of receive beams are not same receive beams. In other words, some of the plurality of receive beams are different.

In some implementations, in a case where the plurality of receive beams are different receive beams, the terminal device Y may receive the first DCR in the beam sweeping manner. Surely, the terminal device Y may also receive the first DCR in other manners, which is not limited in the embodiments of the present disclosure.

Furthermore, in the embodiments of the present disclosure, the plurality of receive beams may be all receive beams supported by terminal device Y. Surely, the plurality of receive beams may be some of all receive beams supported by the terminal device Y, which is not limited in the embodiments of the present disclosure.

In some implementations, the first CSI-RS is determined based on CSI-RS configuration information. For example, referring to FIG. 15, the embodiments of the present disclosure may further include step S1500 before step S1510. In step S1500, the terminal device X obtains the CSI-RS configuration information.

In some implementations, the CSI-RS configuration information may be determined based on one or more of: pre-configured information, configuration information from a network device, configuration information of a resource pool, or configuration information of a sidelink bandwidth part (BWP). Surely, in the embodiments of the present disclosure, the CSI-RS configuration information may also be determined based on other configuration information.

In some implementations, the CSI-RS configuration information may be used for configuring a set of CSI-RS resources. The set of CSI-RS resources includes C CSI-RS resources, where a value of C is determined based on the number of spatial domain filters that a terminal device (e.g., the terminal device X) is capable of supporting, and C is an integer greater than or equal to 1.

It shall be noted that the value of C is determined based on the number of spatial domain filters that the terminal device is capable of supporting, and the value of C may include a value being equal to the number of spatial domain filters that the terminal device is capable of supporting. Surely, in the embodiments of the present disclosure, the value of C is determined based on the number of spatial domain filters that the terminal device is capable of supporting, and the value of C may include a value calculated based on the number of spatial domain filters that the terminal device is capable of supporting.

For example, the value of C may be greater than or less than the number of spatial domain filters that the terminal device is capable of supporting, which is not limited in the embodiments of the present disclosure.

With continued reference to FIG. 15, in a step S1520, the terminal device Y simultaneously transmits the response information for the first DCR and the first CSI-RS resource indication information to the terminal device X.

In some implementations, the first CSI-RS resource indication information is used for indicating a transmit beam expected by the terminal device Y to the terminal device X. In other words, the first CSI-RS resource indication information is used by the terminal device X to determine the transmit beam.

It shall be noted that, in some cases, the first CSI-RS resource indication information may correspond to the first CSI-RS in the step S1510. In this case, the transmit beam expected by the terminal device Y may be the transmit beam associated with the first CSI-RS (i.e., the first transmit beam). Surely, in other cases, the first CSI-RS resource indication information may not correspond to the first CSI-RS in the step S1510. In such a case, the transmit beam expected by the terminal device Y is not the transmit beam associated with the first CSI-RS. For ease of understanding, a description will be made below by taking an example in which the first CSI-RS resource indication information corresponds to the first CSI-RS.

The implementations of the first CSI-RS resource indication information are not limited in the embodiments of the present disclosure. For example, the first CSI-RS resource indication information may include index information of the first CSI-RS. The index information of the first CSI-RS may be used for indicating an index of the first CSI-RS in a set of CSI-RS resources. In other words, the first CSI-RS and a corresponding transmission resource may be determined based on the index information of the first CSI-RS. For another example, the first CSI-RS resource indication information may include information of indicating the first CSI-RS resource.

The meaning of the first CSI-RS resource indication information in the embodiments of the present disclosure is described above, and the transmission manner of the first CSI-RS resource indication information in the embodiments of the present disclosure will be described below.

In some implementations, the first CSI-RS resource indication information may be transmitted via a sidelink channel that is different from a sidelink channel (e.g., PSSCH2) carrying the response information for first DCR. For example, the first CSI-RS resource indication information may be carried in a PSCCH associated with the PSSCH2 (which also referred to as "second PSSCH").

In some other implementations, the first CSI-RS resource indication information may be transmitted simultaneously with the response information for the first DCR. In other words, the first CSI-RS resource indication information may be transmitted via a same sidelink channel as the response information for the first DCR. For example, both the first CSI-RS resource indication information and the response information for the first DCR are carried in the PSSCH2.

In terms of a type of signaling carrying the first CSI-RS resource indication information, in some implementations, the first CSI-RS resource indication information may be carried in a MAC CE. In some other implementations, the first CSI-RS resource indication information may be carried in SCI. The SCI may include first-stage SCI and/or second-stage SCI.

For example, in a case where the response information for the first DCR is carried in the PSSCH2, the first CSI-RS resource indication information may be carried in SCI associated with the PSSCH2. For example, the first CSI-RS resource indication information is carried in the first-stage SCI, the SCI associated with the PSSCH2 may be understood as SCI in a PSCCH associated with the PSSCH2. For example, the first CSI-RS resource indication information is carried in the second-stage SCI, the SCI associated with the PSSCH2 may be understood as the SCI carried in the PSSCH2.

In some implementations, the response information for the first DCR and the first CSI-RS resource indication information may be transmitted by the terminal device Y based on a second transmit beam.

In some implementations, in a case where the terminal device Y has a beam correspondence capability, the terminal device Y determines the second transmit beam based on a receive beam utilized when receiving the first CSI-RS.

In some implementations, the response information for the first DCR may be one of pieces of response information for B DCRs transmitted by the terminal device Y, and the pieces of response information for the B DCRs may be transmitted by the terminal device Y based on B transmit beams, where B is an integer greater than or equal to 1. In other words, assuming that the terminal device Y is capable of transmitting the response information for the first DCR and the first CSI-RS resource indication information based on the second transmit beam, the B transmit beams may include the second transmit beam.

In the embodiments of the present disclosure, the B transmit beams are different transmit beams. In other words, all transmit beams of the B transmit beams are different. Surely, in the embodiments of the present disclosure, the B transmit beams are not same transmit beams. In other words, some of the B transmit beams are different.

In some implementations, in a case where the B transmit beams are different transmit beams, the terminal device Y may transmit the response information for the B DCRs in a beam sweeping manner. Surely, the terminal device Y may also transmit the response information for B DCRs in other manners, which is not limited in the embodiments of the present disclosure.

Furthermore, in the embodiments of the present disclosure, the B transmit beams may be all transmit beams supported by the terminal device Y. Surely, the B transmit beams may be some of all transmit beams supported by the terminal device Y, which is not limited in the embodiments of the present disclosure.

The transmission manner of the response information for the first DCR in the embodiments of the present disclosure is described above. A manner of triggering the response information for the first DCR in the embodiments of the present disclosure will be described below. It shall be noted that, as described above, the response message for the first DCR may be transmitted simultaneously with the first CSI-RS resource indication information in some scenarios. Therefore, the manner of triggering the response information for the first DCR may also be understood as the manner of triggering the first CSI-RS resource indication information.

In some implementations, transmission of the response information for the first DCR and/or the first CSI-RS resource indication information is triggered based on a first condition. The first condition is associated with one or more of: whether the first DCR is received; and a measurement result associated with the first DCR.

For example, the first condition is associated with whether the first DCR is received. In some implementations, the first condition may include that the first DCR is received by the terminal device Y.

It shall be understood that, in the embodiments of the present disclosure, the first DCR being received by the terminal device Y indicates that the first DCR is received and decoded successfully by the terminal device Y.

For example, in a case where the first DCR is received by the terminal device Y, the terminal device Y may transmit the response information for the first DCR and the first CSI-RS resource indication information to the terminal device X. In contrast, in a case where the terminal device Y fails to receive the first DCR, the terminal device Y does not transmit of the response information for the first DCR and the first CSI-RS resource indication information to the terminal device X.

In the embodiments of the present disclosure, the first DCR transmitted by the terminal device X is received by the terminal device Y, which indicates that it is feasible to perform the sidelink transmission based on the transmit beam for transmitting the first DCR and the receive beam for receiving the first DCR. Therefore, in the embodiments of the present disclosure, the first condition may include that the first DCR is received by the terminal device Y, and the response information for the first DCR and the first CSI-RS resource indication information are triggered based on the first condition, which helps to simplify a beam selection process of the terminal device X's transmit beam of and the terminal device Y's receive beam.

For example, the first condition includes the measurement result associated with the first DCR, and a type of the measurement result associated with the first DCR is not specifically limited in the embodiments of the present disclosure. For example, the type of measurement result associated with the first DCR may include reference signal received power (RSRP), or a signal to interference plus noise ratio (SINR). Surely, in the embodiments of the present disclosure, the type of measurement result associated with the first DCR may further include reference signal received quality (RSRQ).

Furthermore, a type of a signal (also referred to as "first signal") measured by the above measurement result is not limited in the embodiments of the present disclosure. For example, the first signal includes one or more of: a physical sidelink control channel demodulation reference signal (PSCCH DMRS); a physical sidelink shared channel demodulation reference signal (PSSCH DMRS); and the first CSI-RS.

Accordingly, in a case where the first signal includes the PSCCH DMRS, a PSCCH carrying the first signal may be associated with a PSSCH carrying the first DCR. For example, the PSCCH of the first signal may be located in a same slot as the PSSCH carrying the first DCR. Therefore, a measurement result of the first signal is associated with the first DCR, or the measurement result associated with the first DCR is determined according to a measurement result of the PSCCH DMRS.

In a case where the first signal includes the PSSCH DMRS, the PSSCH carrying the first signal may carry the first DCR. Therefore, the measurement result of the first signal is associated with the first DCR. Alternatively, the measurement result associated with the first DCR is determined according to the measurement result of the PSSCH DMRS.

In a case where the first signal includes the first CSI-RS, as described above, the first CSI-RS may be transmitted simultaneously with the first DCR and may be associated with the transmit beam for transmitting the first DCR. Therefore, the measurement result of the first signal is associated with the first DCR. Alternatively, the measurement result associated with the first DCR is determined according to the measurement result of the first CSI-RS.

In some implementations, the first condition may include that the measurement result associated with the first DCR is greater than or equal to a first threshold. In other words, the first condition may include that the first DCR is received by a receiving device of the first DCR and the measurement result associated with the first DCR is greater than or equal to the first threshold.

A manner of determining the first threshold is not limited in the embodiments of the present disclosure. For example, the first threshold may be pre-defined based on a protocol. For another example, the first threshold may be determined based on pre-configured information. For another example, the first threshold may be configured by a network device through configuration information.

In the embodiments of the present disclosure, the first DCR transmitted by the terminal device X is received by the terminal device Y and the measurement result associated with the first DCR is greater than the first threshold. This indicates that performing the sidelink transmission based on the transmit beam for transmitting the first DCR and the receive beam for receiving the first DCR is not only feasible, but also helps to ensure quality of a signal in the sidelink transmission. In this way, a communication requirement of the sidelink transmission between the terminal device X and the terminal device Y is basically met.

In some other implementations, the first condition may include that the measurement result associated with the first DCR is greater than or equal to a first measurement result. In other words, the first condition may include that the first DCR is received by the terminal device Y and the measurement result associated with the first DCR is greater than or equal to the first measurement result.

The first measurement result may be determined based on a measurement result corresponding to response information for a DCR that has been transmitted by the terminal device Y. The response information for the DCR that has been transmitted may be understood as a respective measurement result corresponding to respective piece of response information for one or more DCRs transmitted by the terminal device Y before transmitting the response information for the first DCR.

In some implementations, in a case where the response information for the DCR that has been transmitted may be understood as a measurement result corresponding to a piece of response information for one DCR transmitted before transmitting the response information for the first DCR. The measurement result corresponding to the piece of the response information for the DCR may be a measurement result corresponding to response information for DCR transmitted by the terminal device Y last time.

For example, assuming that the terminal device Y transmits response information 1 for the DCR and response information 2 for the DCR successively, and if a measurement result corresponding to the response information 2 for the DCR is a measurement result corresponding to the response information for the first DCR, the response information 1 for the DCR is the measurement result corresponding to the response information for the DCR transmitted by the terminal device Y last time.

In some implementations, the measurement results corresponding to pieces of response information for the plurality of DCRs may include a measurement result corresponding to response information for each DCR in the pieces of response information for the plurality of DCRs. In this case, the measurement results corresponding to the pieces of response information for the plurality of DCRs may include a plurality of measurement results. Surely, in the embodiment of the present disclosure, the measurement results corresponding to the pieces of response information for the plurality of DCRs may further include one measurement result (also called "a target measurement result") corresponding to the pieces of response information for the plurality of DCRs. The target measurement result may be determined based on the plurality of measurement results corresponding to the pieces of response information for the plurality of DCRs. For example, the target measurement result corresponding to the pieces of response information for the plurality of DCRs may be one of: an average measurement result of the plurality of measurement results corresponding to the pieces of response information for the plurality of DCRs, a maximum measurement result among the plurality of measurement results corresponding to the pieces of response information for the plurality of DCRs, and a minimum measurement result among the plurality of measurement results corresponding to the pieces of response information for the plurality of DCRs.

In some implementations, determining the first measurement result based on the measurement result corresponding to the response information for the DCR that has been transmitted may include that the first measurement result is obtained by adjusting (e.g., calculating) the measurement result corresponding to the response information for the DCR that has been transmitted. Surely, in the embodiments of the present disclosure, determining the first measurement result based on the measurement result corresponding to the response information for the DCR that has been transmitted may include that the first measurement result is equal to the measurement result corresponding to the response information for the DCR that has been transmitted. A description will be made in conjunction with Embodiment 2 below, which will not be repeated here for the sake of brevity.

In the embodiments of the present disclosure, the measurement result associated with the first DCR is greater than or equal to the first measurement result, which indicates that, compared with a sidelink transmission based on a transmit beam and a receive beam corresponding to the first measurement result, the sidelink transmission based on the transmit beam for transmitting the first DCR and the receive beam for receiving the first DCR has better communication quality of the sidelink transmission. Therefore, in the embodiments of the present disclosure, the first condition may include that the measurement result associated with the first DCR is greater than or equal to the first measurement result, which helps to enhance the communication quality of the sidelink transmission between the terminal device X and the terminal device Y.

It shall be noted that, in some scenarios, the various implementations of the first condition described above may be used separately. In other scenarios, the various implementations of the first condition described above may be used in combination with each other.

For example, the first condition may include that the first DCR (denoted as DCR1) is received by the terminal device Y. Accordingly, in a case where the DCR1 and the first CSI-RS (denoted as CSI-RS1) is received by the terminal device Y, and the DCR1 is a first DCR that is received by the terminal device Y, the terminal device Y transmits response information for the DCR1 and CSI-RS resource indication information 1 to the terminal device X. The CSI-RS resource indication information 1 is used for indicating the CSI-RS 1.

For another example, the first condition may include that the measurement result associated with the first DCR is greater than or equal to the first threshold. Accordingly, in a case where the DCR1 and the CSI-RS1 is received by the terminal device Y and the measurement result associated with the DCR1 is greater than or equal to the first threshold, the terminal device Y transmits the response information for the DCR1 and the CSI-RS resource indication information 1 to the terminal device X. The CSI-RS resource indication information 1 is used for indicating the CSI-RS1.

For another example, the first condition may include that the first DCR is received by the terminal device Y and the measurement result associated with the first DCR is greater than the first measurement result. Accordingly, in a case where the DCR1 and the CSI-RS1 is received by the terminal device Y and the DCR1 is the first DCR received by the terminal device Y, the terminal device Y transmits the response information for the DCR1 and the CSI-RS resource indication information 1 to the terminal device X. In this case, the CSI-RS resource indication information 1 is used for indicating the CSI-RS1 and the measurement result associated with the DCR1 is a first value. Subsequently, in a case where DCR2 and CSI-RS2 transmitted by the terminal device X is received by the terminal device Y, and a measurement result corresponding to the DCR2 is greater than the first value, the terminal device Y transmits response information for the DCR2 and CSI-RS resource indication information 2 to the terminal device X. The CSI-RS resource indication information 2 is used for indicating the CSI-RS2. In contrast, in a case where the measurement result associated with the DCR2 is less than or equal to the first value, the terminal device Y does not transmit the response information for the DCR2 and the CSI-RS resource indication information 2.

For another example, the first condition may include that the measurement result associated with the first DCR received by the terminal device Y is greater than or equal to the first threshold, and the measurement result associated with the first DCR is greater than or equal to the first measurement result. Accordingly, in a case where the DCR1 and the CSI-RS1 is received by the terminal device Y, the measurement result associated with the DCR1 is the first value and the first value is greater than or equal to the first threshold, the terminal device Y transmits the response information for the DCR1 and the CSI-RS resource indication information 1 to the terminal device X. The CSI-RS resource indication information 1 is used for indicating the CSI-RS1. Consequently, in a case where the DCR2 and the CSI-RS2 transmitted by the terminal device X is received by the terminal device Y, and the measurement result associated with the DCR2 is greater than the first value, the terminal device Y transmits the response information for the DCR2 and the CSI-RS resource indication information 2 to the terminal device X. The CSI-RS resource indication information 2 is used for indicating the CSI-RS2. In contrast, in a case where the measurement result corresponding to the DCR2 is less than or equal to the first value, the terminal device Y does not transmit the response information for the DCR2 and the CSI-RS resource indication information 2.

As described above, in some scenarios, the terminal device may autonomously select a sidelink transmission resource for the response information for the first DCR by using the second Mode. Therefore, in order to improve the rationality of selecting the sidelink transmission resource, the embodiments of the present disclosure further provides a method for selecting the sidelink transmission resource.

It shall be noted that, in the embodiments of the present disclosure, the method of selecting the sidelink transmission resource for transmitting the response information for the first DCR may also be applied to selecting a sidelink transmission resource for transmitting the first CSI-RS resource indication information. Surely, in the embodiments of the present disclosure, the sidelink transmission resource for transmitting the first CSI-RS resource indication information may also be selected in other ways. For example, the sidelink transmission resource for transmitting the first CSI-RS resource indication information may be determined based on the sidelink transmission resource for transmitting the response information for the first DCR, which is not limited in the embodiments of the present disclosure.

In some implementations, the sidelink transmission resource for transmitting the response information for the first DCR may be determined within a first time range. In other words, the sidelink transmission resource is located within the first time range in the time domain. The first time range may be, for example, a resource selection window. In other words, the sidelink transmission resource may be located within the resource selection window.

In some implementations, a starting time of the first time range (e.g., a starting time-domain position of the resource selection window) may be determined based on one or more of: a time-domain unit where the first DCR is located; and a first time interval.

For example, the starting time of the first time range is determined based on the time-domain unit where the first DCR is located. In some implementations, the starting time of the first time range may be determined based on a starting time of the time-domain unit where the first DCR is located. In some other implementations, the starting time of the first time range may be determined based on an ending time of the time-domain unit where the first DCR is located, which is not limited in the embodiments of the present disclosure.

In the embodiments of the present disclosure, the time-domain unit may be a time-domain unit such as a slot or a symbol, and surely, the time-domain unit may also be other time-domain unit introduced in the future communication system. For example, the time-domain unit is the slot, and the starting time of the first time range may be determined based on a slot where the first DCR is located.

For example, the starting time of the first time range is determined based on the first time interval. In some implementations, the first time interval may be represented by the number of time-domain units. The description of the time-domain unit may be found above. For example, the first time interval may be any one of 1 time-domain unit, 4 time-domain units, 6 time-domain units, 11 time-domain units, and 21 time-domain units. For example, the time-domain unit is the slot, the first time interval $T_1$ is equal to 1, 4, 6, 11 or 21 slots. Surely, in the embodiments of the present disclosure, the first time interval may also be represented by a time period.

For example, the starting time of the first time range is determined based on both the time-domain unit where the first DCR is located and the first time interval. In some implementations, the starting time of the first time range may be a time point offset by the first time interval after the starting time of the time-domain unit where the first DCR is located. In some other implementations, the starting time of the first time range may be a time point offset by the first time interval after the ending time of the time-domain unit where the first DCR is located, which is not limited in the embodiments of the present disclosure.

In the embodiments of the present disclosure, the first time interval may be associated with a sidelink subcarrier spacing. In some implementations, a value of the first time interval $T_1$ may be determined based on $T_{proc,0}^{SL}$ and $T_{proc,1}^{SL}$, where a value of $T_{proc,0}^{SL}$ and/or a value of $T_{proc,1}^{SL}$ may be determined based on the subcarrier spacing.

For example, assuming that the slot where the first DCR is located is slot n, and the first time interval is $T_1$ slots. Accordingly, the starting time of the first time range is slot n+$T_1$. A relationship among $T_1 = T_{proc,0}^{SL} + T_{proc,1}^{SL}$, $T_{proc,0}^{SL}$, and parameter $\mu_{SL}$ may refer to Table 1; and a relationship between $T_{proc,1}^{SL}$ and the parameter $\mu_{SL}$ may refer to Table 2, where the parameter $\mu_{SL}$ is used for indicating the subcarrier spacing $\Delta f$, and $T_1$ is an integer greater than or equal to 0.

As shown in the Table 1, if the parameter $\mu_{SL}$ is 0, the value of $T_{proc,0}^{SL}$ is 1 slot. If the parameter $\mu_{SL}$ is 1,

the value of $T_{proc,0}^{SL}$ is 1 slot. If the parameter $\mu_{SL}$ is 2, the value of $T_{proc,0}^{SL}$ is 2 slots. If the parameter $\mu_{SL}$ is 3, the value of $T_{proc,0}^{SL}$ is 4 slots.

Table 1

| $\mu_{SL}$ | $T_{proc,0}^{SL}$ [slots] |
|---|---|
| 0 | 1 |
| 1 | 1 |
| 2 | 2 |
| 3 | 4 |

As shown in the Table 2, if the parameter $\mu_{SL}$ is 0, the value of $T_{proc,1}^{SL}$ is 3 slots. If the parameter $\mu_{SL}$ is 1, the value of $T_{proc,1}^{SL}$ is 5 slots. If the parameter $\mu_{SL}$ is 2, the value of $T_{proc,1}^{SL}$ is 9 slots. If the parameter $\mu_{SL}$ is 3, the value of $T_{proc,1}^{SL}$ is 17 slots.

Table 2

| $\mu_{SL}$ | $T_{proc,1}^{SL}$ [slots] |
|---|---|
| 0 | 3 |
| 1 | 5 |
| 2 | 9 |
| 3 | 17 |

A corresponding relationship between the parameter $\mu_{SL}$ and the subcarrier spacing $\Delta f$ may refer to Table 3. As shown in the Table 3, if the parameter $\mu_{SL}$ is 0, the subcarrier spacing $\Delta f$ is 15 kHz. If the parameter $\mu_{SL}$ is 1, the subcarrier spacing $\Delta f$ is 30 kHz. If the parameter $\mu_{SL}$ is 2, the subcarrier spacing $\Delta f$ is 60 kHz. If the parameter $\mu_{SL}$ is 3, the subcarrier spacing $\Delta f$ is 120 kHz.

Table 3

| $\mu_{SL}$ | Subcarrier spacing $\Delta f = 2^{\mu_{SL}} \cdot 15$ [kHz] |
|---|---|
| 0 | 15 |
| 1 | 30 |
| 2 | 60 |
| 3 | 120 |

In the embodiments of the present disclosure, the first time interval may be determined based on one of information pre-defined in a protocol, pre-configured information, and configuration information from a network device, which is not limited in the embodiments of the present disclosure.

In some implementations, an ending time or duration of the first time range may be determined based on one of the information pre-defined in a protocol, the pre-configured information, and the configuration information from the network device.

In some implementations, a first sidelink transmission resource for transmitting the response information for the first DCR is determined based on configuration information, and the configuration information is used for indicating a latency boundary corresponding to the first sidelink transmission resource. In other words, a time-domain position of the first sidelink transmission resource is not later than the latency boundary.

For example, the terminal device X and/or the terminal device Y may determine a timer duration according to a duration corresponding to the latency boundary, and perform transmission or reception of the response information for the first DCR before the timer times out or expires. In other words, the terminal device Y transmits the response information for the first DCR to the terminal device X before the timer times out or expires.

In the embodiments of the present disclosure, the duration and/or the ending time corresponding to the first time range may be determined based on the latency boundary. In some implementations, the configuration information includes indication information of the latency boundary. Accordingly, the duration corresponding to the first time range may be determined according to the latency boundary. For example, the duration of the first time range is set so that the ending time of the first time range is not later than the latency boundary.

In some other implementations, the configuration information includes the indication information of the latency boundary. Accordingly, the ending time of the first time range may be determined according to the latency boundary. For example, the ending time of the first time range is not later than the latency boundary.

The configuration information is not specifically limited in the embodiments of the present disclosure. For example, the configuration information may be resource pool configuration information.

It shall be noted that, in the embodiments of the present disclosure, a terminal device performing resource selection may be the terminal device X or the terminal device Y. In a case where the sidelink transmission resource is selected by the terminal device Y, the terminal device Y may transmit the response information for the first DCR on the selected sidelink transmission resource. In a case where the sidelink transmission resource is selected by the terminal device X, the terminal device X may inform the terminal device Y of the selected sidelink transmission resource after selecting the sidelink transmission resource. Accordingly, the terminal device Y may transmit the response information for the first DCR on the selected sidelink transmission resource.

Furthermore, in the embodiments of the present disclosure, the process of transmitting the first DCR and the response information for the first DCR described above in combination with the steps S1510 to S1520 may be performed in combination with each other. In other words, the first DCR involved in the response information for the first DCR in the step S1520 is the same as the first DCR in the step S1510. Surely, in the embodiments of the present disclosure, the above steps S1510 to S1520 may also be performed separately. For example, if the manner of transmitting the response information for the first DCR described in the step S1520 is used only, the embodiments of the present disclosure does not impose any limitation on the manner of transmitting the first DCR. For another example, if the manner of transmitting the first DCR described in the step S1510 is used only, the embodiments of the present disclosure does not impose any limitation on the manner of transmitting the response information for the first DCR.

As described above, the terminal device Y may transmit the first CSI-RS resource indication information to the terminal device X to indicate the transmit beam of the terminal device X for sidelink transmission. Accordingly, the terminal device X may perform the sidelink transmission based on a transmit beam associated with the first CSI-RS resource indication information. In other words, with continued reference to FIG. 15, in step S1530, the terminal device X performs the sidelink transmission based on the transmit beam associated with the first CSI-RS resource indication information.

In some implementations, the first CSI-RS resource indication information may be CSI-RS resource indication information most recently received by the terminal device X. Surely, the first CSI-RS resource indication information may be any CSI-RS resource indication information received by the terminal device X, which is not limited in the embodiments of the present disclosure.

For example, the terminal device Y transmits CSI-RS resource indication information 1 and CSI-RS resource indication information 2 successively. Accordingly, the terminal device X first receives the CSI-RS resource indication information 1 and receives the CSI-RS resource indication information 2 afterwards. In this case, the CSI-RS resource indication information 2 is the CSI-RS resource indication information most recently received by the terminal device X, and the terminal device X may perform the sidelink communication based on a transmit beam associated with the CSI-RS resource indication information 2.

It shall be noted that the sidelink transmission in step S1430 is not limited in the embodiments of the present disclosure. In some implementations, the sidelink transmission may include sidelink transmission between the terminal device X and the terminal device Y, for example, sidelink transmission between the terminal device X and the terminal device Y based on a unicast link. Surely, in the embodiments of the present disclosure, the sidelink transmission may further include sidelink transmission between the terminal device X and other terminal devices proximate to the terminal device Y.

For ease of understanding, the method for sidelink transmission in the embodiments of the present disclosure is described below in combination with Embodiment 1 and Embodiment 2.

FIG. 16 is a schematic diagram of a method for sidelink transmission according to the embodiments of the present disclosure. In the method shown in FIG. 16, it is assumed that the first condition triggering transmission of the response information for the DCR includes that the DCR is received by the terminal device Y.

As shown in FIG. 16, the terminal device X supports four transmit beams: a beam A, a beam B, a beam C, and a beam D. The terminal device Y supports two transmit beams: a beam 1 and a beam 2.

During a process of transmitting of the DCR, the terminal device X simultaneously transmits the DCR, the CSI-RS, and the CSI-RS resource indication information.

In some implementations, the terminal device X may transmit the above information in the beam sweeping manner. In other words, the terminal device X transmits a DCR, a CSI-RS0 and CSI-RS resource indication information 0 via the transmit beam A in a slot a, and the CSI-RS resource indication information 0 is used for indicating the CSI-RS0. The terminal device X transmits a DCR, a CSI-RS1 and CSI-RS resource indication information 1 via the transmit beam B in a slot b, and the CSI-RS resource indication information 1 is used for indicating the CSI-RS1. The terminal device X transmits a DCR, a CSI-RS2 and CSI-RS resource indication information 2 via the transmit beam C in a slot c, and the CSI-RS resource indication information 2 is used for indicating the CSI-RS2. The terminal device X transmits a DCR, a CSI-RS3 and CSI-RS resource indication information 3 via the transmit beam D in a slot d, and the CSI-RS resource indication information 3 is used for indicating the CSI-RS3.

Accordingly, in a case where the DCR, the CSI-RS2 and the CSI-RS resource indication information 2 may be received by the terminal device Y, the terminal device Y may determine a CSI-RS resource transmitted simultaneously with the DCR as CSI-RS resource 2 based on the CSI-RS resource indication information 2. In some implementations, the terminal device Y receives the DCR transmitted by the terminal device X via an omni-direction antenna.

In a process of transmitting the response information for the DCR, the terminal device Y simultaneously transmits the response information for the DCR and the CSI-RS resource indication information.

In some implementations, the terminal device Y may transmit the above information in the beam sweeping manner. That is, the terminal device Y transmits the response information for the DCR and the CSI-RS resource indication information 2 via the transmit beam 0 in a slot e. The terminal device Y transmits the response information for the DCR and the CSI-RS resource indication information 2 via the transmit beam 1 in a slot f.

Accordingly, the terminal device X receives the response information for the DCR and the CSI-RS resource indication information 2 via the omni-direction antenna. In a case where the response information for the DCR and the CSI-RS resource indication information 2 is received by the terminal device X, the terminal device X may select the transmit beam C based on the CSI-RS resource indication information 2, and perform sidelink transmission by utilizing the transmit beam C as the transmit beam for sidelink transmission illustrated in a slot g. Accordingly, the terminal device Y may receive the sidelink transmission based on the omni-direction antenna.

It shall be understood that FIG. 16 only exemplarily illustrates slot positions for communication utilizing various transmit beams, which does not mean that there is a strict order relationship between slots a to g. For example, the terminal device Y may obtain the DCR transmitted by the terminal device X with the beam C in the slot c, and transmit the response information for the DCR in the slot e and the slot f. In this case, the slot e or the slot f may be located prior to the slot d.

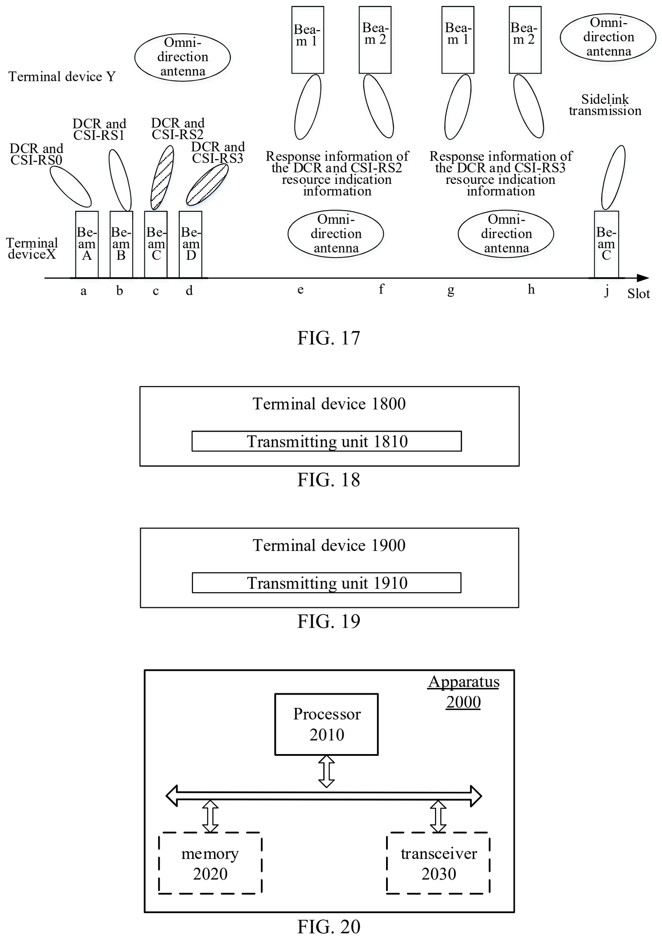

FIG. 17 is a schematic diagram of a method for sidelink transmission according to another embodiment of the present disclosure. In the method shown in FIG. 17, it is assumed that the first condition triggering the transmission of the response information for the DCR includes that the measurement result corresponding to the response information for the DCR received by the terminal device Y is greater than the first measurement result.

Referring to FIG. 17, the terminal device X supports four transmit beams: a beam A, a beam B, a beam C, and a beam D. The terminal device Y supports two transmit beams: a beam 1 and a beam 2.

During a process of transmitting the DCR, the terminal device X simultaneously transmits the DCR, the CSI-RS, and the CSI-RS resource indication information.

In some implementations, the terminal device X may transmit the above information in a beam sweeping manner. In other words, the terminal device X transmits a DCR, a CSI-RS0, and CSI-RS resource indication information 0 via the transmit beam A in a slot a, and the CSI-RS resource indication information 0 is used for indicating the CSI-RS0. The terminal device X transmits a DCR, a CSI-RS1, and CSI-RS resource indication information 1 via the transmit beam B in a slot b, and the CSI-RS resource indication information 1 is used for indicating the CSI-RS1. The terminal device X transmits a DCR, a CSI-RS2, and CSI-RS resource indication information 2 via the transmit beam C in a slot c, and the CSI-RS resource indication information 2 is used for indicating the CSI-RS2. The terminal device X transmits a DCR, a CSI-RS3, and CSI-RS resource indication information 3 via the transmit beam D in a slot d, and the CSI-RS resource indication information 3 is used for indicating the CSI-RS3.

Accordingly, in a case where the DCR, the CSI-RS2 and the CSI-RS resource indication information 2 may be received by the terminal device Y in the slot c, the terminal device Y may determine a CSI-RS resource transmitted simultaneously with the DCR as CSI-RS resource 2 based on the CSI-RS resource indication information 2, and the measured DCR-associated measurement result is RSRP1. In some implementations, the terminal device Y receives the DCR transmitted by the terminal device X via an omni-direction antenna.

In a process 1 of transmitting the response information for the DCR, the terminal device Y simultaneously transmits the response information for the DCR and the CSI-RS resource indication information 2.

In some implementations, the terminal device Y may transmit the above information in the beam sweeping manner. In other words, the terminal device Y transmits the response information for the DCR and the CSI-RS resource indication information 2 via the transmit beam 0 in a slot e. The terminal device Y transmits the response information for the DCR and the CSI-RS resource indication information 2 via the transmit beam 1 in a slot f.

Accordingly, the terminal device X receives the response information for the DCR and the CSI-RS resource indication information 2 via the omni-direction antenna. In a case where the response information for the DCR and CSI-RS resource indication information 2 is received by the terminal device X, the terminal device X may select the transmit beam C based on the CSI-RS resource indication information 2.

Accordingly, in a case where the DCR, the CSI-RS3 and the CSI-RS resource indication information 3 may be received by the terminal device Y in the lot d, the terminal device Y may determine a CSI-RS resource transmitted simultaneously with the DCR as CSI-RS resource 3 based on the CSI-RS resource indication information 3, and the measurement result associated with a measured DCR is a RSRP2. In some implementations, the terminal device Y receives the DCR transmitted by the terminal device X via the omni-direction antenna.

In a process 2 of transmitting the response information for the DCR, in a case where the RSRP2 is greater than the RSRP1, the terminal device Y simultaneously transmits the response information for the DCR and the CSI-RS resource indication information 3.

In some implementations, the terminal device Y may transmit the above information in the beam sweeping manner. In other words, the terminal device Y transmits the response information for the DCR and the CSI-RS resource indication information 3 via the transmit beam 0 in a slot g. The terminal device Y transmits the response information for the DCR and the CSI-RS resource indication information 3 via the transmit beam 1 in a slot h.

Accordingly, the terminal device X receives the response information for the DCR and the CSI-RS resource indication information 3 via the omni-direction antenna. In a case where the response information for the DCR and the CSI-RS resource indication information 3 is received by the terminal device X, and a slot where the CSI-RS resource indication information 3 is located is after a slot where the CSI-RS resource indication information 2 is located, the terminal device X may select the transmit beam D based on the CSI-RS resource indication information 3, and perform sidelink transmission by utilizing the transmit beam D as the transmit beam for the sidelink transmission illustrated in a slot j. Accordingly, the terminal device Y may receive the sidelink transmission based on the omni-direction antenna.

It shall be understood that FIG. 17 only exemplarily illustrates slot positions for communication utilizing various transmit beams, which does not mean that there is a strict order relationship between slots a to j. For example, the terminal device Y obtains the DCR transmitted by the terminal device X with the beam C in the slot c, and transmits the response information for the DCR in the slot e and the slot f. In other words, the slot e or the slot f may be located prior to the slot d. Furthermore, in embodiments of the disclosure, the slot g or the slot h may also be prior to the slot f.

The method embodiments of the present disclosure are described in detail above in combination with FIGS. 1 to 17, and apparatus embodiments of the present disclosure will be described in detail hereafter in combination with FIGS. 18 to 20. It shall be understood that the description of the method embodiments correspond to the description of the apparatus embodiments. Therefore, those parts not described in detail may refer to the method embodiments above.

FIG. 18 is a schematic diagram of a terminal device according to the embodiments of the present disclosure. The terminal device 1800 illustrated in FIG. 18 is a first terminal device, and the terminal device 1800 includes a transmitting unit 1810.

The transmitting unit 1810 is used for transmitting first information to a second terminal device. The first information is associated with a first direct communication request (DCR), and the first information is transmitted simultaneously with one or more of a first channel state information reference signal (CSI-RS); and first CSI-RS resource indication information.

In a possible implementation, the first information is one of the first DCR; and response information for the first DCR.

In a possible implementation, in a case where the first information is the first DCR, the first information is transmitted simultaneously with the first CSI-RS and the first CSI-RS resource indication information, and the first CSI-RS resource indication information is used for indicating the first CSI-RS.

In a possible implementation, in a case where the first information is the response information for the first DCR, the first information is transmitted simultaneously with the first CSI-RS resource indication information. The first CSI-RS resource indication information is used for indicating the first CSI-RS, and/or the first CSI-RS resource indication information is used by the second terminal device to determine a spatial domain transmission filter.

In a possible implementation, the first information being transmitted simultaneously with the first CSI-RS resource indication information includes one of: the first information and the first CSI-RS resource indication information being carried in a first PSSCH; and the first information being carried in the first PSSCH, and the first CSI-RS resource indication information being carried in sidelink control information (SCI) associated with the first PSSCH.

In a possible implementation, the first CSI-RS resource indication information is carried in sidelink control information (SCI) and/or a media access control element (MAC CE).

In a possible implementation, the first DCR is transmitted by a transmitting device of the first DCR based on a first spatial domain transmission filter.

In a possible implementation, the first DCR is one of A DCRs transmitted by the transmitting device of the first DCR, and the A DCRs are transmitted based on A spatial domain transmission filters. The A spatial domain transmission filters are different spatial domain transmission filters, alternatively, the A spatial domain transmission filters are not same spatial domain transmission filters, where A is an integer greater than or equal to 1.

In a possible implementation, the first DCR is received based on one of a fixed spatial domain reception filter; a plurality of spatial domain reception filters supported by a receiving device of the first DCR; and an omni-direction antenna.

In a possible implementation, the response information for the first DCR includes direct communication accept (DCA).

In a possible implementation, the response information for the first DCR is transmitted by the transmitting device of the response information for the first DCR based on a second spatial domain transmission filter.

In a possible implementation, the response information for the first DCR is one of pieces of response information for B DCRs transmitted by the transmitting device of the response information for the first DCR, and the pieces of response information for the B DCRs are transmitted based on B spatial domain transmission filters. The B spatial domain transmission filters are different spatial domain transmission filters, alternatively, the B spatial domain transmission filters are not same spatial domain transmission filters, where B is an integer greater than or equal to 1.

In a possible implementation, transmission of the response information for the first DCR is triggered based on a first condition, and the first condition is associated with one or more of whether the first DCR is received; and a measurement result associated with the first DCR.

In a possible implementation, the first condition includes one or more of: the first DCR being received by the receiving device of the first DCR; the first DCR being received by the receiving device of the first DCR and the measurement result associated with the first DCR being greater than or equal to a first threshold; and the first DCR being received by the receiving device of the first DCR and the measurement result associated with the first DCR being greater than or equal to a first measurement result. The first measurement result is determined based on a measurement result corresponding to response information for a DCR that has been transmitted by the transmitting device of the response information for the first DCR.

In a possible implementation, the measurement result associated with the first DCR includes one or more of reference signal received power (RSRP), and a signal to interference plus noise ratio (SINR).

In a possible implementation, the measurement result associated with the first DCR is determined based on measurement of a first signal. The first signal includes one or more of a physical sidelink control channel demodulation reference signal (PSCCH DMRS); a physical sidelink shared channel demodulation reference signal (PSSCH DMRS); and the first CSI-RS.

In a possible implementation, the first CSI-RS is determined based on CSI-RS configuration information, and the CSI-RS configuration information is determined based on one or more of pre-configured information, configuration information from a network device, configuration information of a resource pool, and configuration information of a sidelink bandwidth part (BWP).

In one possible implementation, the CSI-RS configuration information is used for configuring a set of CSI-RS resources, and the set of CSI-RS resources includes C CSI-RS resources. A value of C is determined based on a number of spatial domain filters that the terminal device is capable of supporting, and C is an integer greater than or equal to 1.

In a possible implementation, a sidelink transmission resource for transmitting the response information for the first DCR is determined within a first time range.

In a possible implementation, a starting time of the first time range is determined based on one or more of a time-domain unit where the first DCR is located; and a first time interval.

In a possible implementation, the first time interval is determined based on one of information pre-defined in a protocol, pre-configured information, and configuration information from the network device.

In a possible implementation, the first time interval is associated with a sidelink subcarrier spacing.

In a possible implementation, an ending time or duration of the first time range is determined based on one of the information pre-defined in the protocol, the pre-configured information, and the configuration information from the network device.

In a possible implementation, a first sidelink transmission resource for transmitting the response information for the first DCR is determined based on configuration information, and the configuration information is used for indicating a latency boundary corresponding to the first sidelink transmission resource.

FIG. 19 is a schematic diagram of a terminal device according to the embodiments of the present disclosure. The terminal device 1900 illustrated in FIG. 19 is a second terminal device, and the terminal device 1900 includes a receiving unit 1910.

The receiving unit 1910 is used for receiving first information transmitted by a first terminal device. The first information is associated with a first direct communication request (DCR), and the first information is transmitted simultaneously with one or more of a first channel state information reference signal (CSI-RS); and first CSI-RS resource indication information.

In a possible implementation, the first information is one of the first DCR; and response information for the first DCR.

In a possible implementation, in a case where the first information is the first DCR, the first information is transmitted simultaneously with the first CSI-RS and the first CSI-RS resource indication information, and the first CSI-RS resource indication information is used for indicating the first CSI-RS.

In a possible implementation, in a case where the first information is the response information for the first DCR, the first information is transmitted simultaneously with the first CSI-RS resource indication information. The first CSI-RS resource indication information is used for indicating the first CSI-RS, and/or the first CSI-RS resource indication information is used by the second terminal device to determine a spatial domain transmission filter.

In a possible implementation, the first information being transmitted simultaneously with the first CSI-RS resource indication information includes one of: both the first information and the first CSI-RS resource indication information being carried in a first PSSCH; and the first information being carried in the first PSSCH, and the first CSI-RS resource indication information being carried in sidelink control information (SCI) associated with the first PSSCH.

In a possible implementation, the first CSI-RS resource indication information is carried in sidelink control information (SCI) and/or a media access control element (MAC CE).

In a possible implementation, the first DCR is transmitted by a transmitting device of the first DCR based on a first spatial domain transmission filter.

In a possible implementation, the first DCR is one of A DCRs transmitted by the transmitting device of the first DCR, and the A DCRs are transmitted based on A spatial domain transmission filters. The A spatial domain transmission filters are different spatial domain transmission filters, alternatively, the A spatial domain transmission filters are not same spatial domain transmission filters, where A is an integer greater than or equal to 1.

In a possible implementation, the first DCR is received based on one of a fixed spatial domain reception filter; a plurality of spatial domain reception filters supported by a receiving device of the first DCR; and an omni-direction antenna.

In a possible implementation, the response information for the first DCR includes direct communication accept (DCA).

In a possible implementation, the response information for the first DCR is transmitted by the transmitting device of the response information for the first DCR based on a second spatial domain transmission filter.

In a possible implementation, the response information for the first DCR is one of pieces of response information for B DCRs transmitted by the transmitting device of the response information for the first DCR, and the pieces of response information for the B DCRs are transmitted based on B spatial domain transmission filters. The B spatial domain transmission filters are different spatial domain transmission filters, alternatively, the B spatial domain transmission filters are not same spatial domain transmission filters, where B is an integer greater than or equal to 1.

In a possible implementation, transmission of the response information for the first DCR is triggered based on a first condition. The first condition is associated with one or more of whether the first DCR is received; and a measurement result associated with the first DCR.

In a possible implementation, the first condition includes one or more of: the first DCR being received by the receiving device of the first DCR; the first DCR being received by the receiving device of the first DCR and the measurement result associated with the first DCR being greater than or equal to a first threshold; and the first DCR being received by the receiving device of the first DCR and the measurement result associated with the first DCR being greater than or equal to a first measurement result. The first measurement result is determined based on a measurement result corresponding to response information for a DCR that has been transmitted by the transmitting device of the response information for the first DCR.

In a possible implementation, the measurement result associated with the first DCR includes one or more of reference signal received power (RSRP), and a signal to interference plus noise ratio (SINR).

In a possible implementation, the measurement result associated with the first DCR is determined based on measurement of a first signal. The first signal includes one or more of a physical sidelink control channel demodulation reference signal (PSCCH DMRS); a physical sidelink shared channel demodulation reference signal (PSSCH DMRS); and the first CSI-RS.

In a possible implementation, the first CSI-RS is determined based on CSI-RS configuration information, and the CSI-RS configuration information is determined based on one or more of pre-configured information, configuration information from a network device, configuration information of a resource pool, and configuration information of a sidelink bandwidth part (BWP).

In a possible implementation, the CSI-RS configuration information is used for configuring a set of CSI-RS resources, and the set of CSI-RS resources includes C CSI-RS resources. A value of C is determined based on a number of spatial domain filters that the terminal device is capable of supporting, and C is an integer greater than or equal to 1.

In a possible implementation, a sidelink transmission resource for transmitting the response information for the first DCR is determined within a first time range.

In a possible implementation, a starting time of the first time range is determined based on one or more of a time-domain unit where the first DCR is located; and a first time interval.

In a possible implementation, the first time interval is determined based on one of information pre-defined in a protocol, pre-configured information, and configuration information from the network device.

In a possible implementation, the first time interval is associated with a sidelink subcarrier spacing.

In a possible implementation, an ending time or duration of the first time range is determined based on one of the information pre-defined in a protocol, the pre-configured information, and the configuration information from the network device.

In a possible implementation, a first sidelink transmission resource for transmitting the response information for the first DCR is determined based on configuration information. The configuration information is used for indicating a latency boundary corresponding to the first sidelink transmission resource.

In an optional embodiment, the transmitting unit 1810 may be a transceiver 2030. The terminal device 1800 may further include a processor 2010 and a memory 2020, as specifically illustrated in FIG. 20.

In an optional embodiment, the receiving unit 1910 may be the transceiver 2030. The terminal device 1900 may further include the processor 2010 and the memory 2020, as specifically illustrated in FIG. 20.

FIG. 20 is a schematic diagram illustrating a structure of a communication apparatus according to the embodiments of the present disclosure. The dashed lines in FIG. 20 indicate that a unit or module is optional. An apparatus 2000 may be used to implement the method described in the above method embodiments. The apparatus 2000 may be a chip, a terminal device or a network device.

The apparatus 2000 may include one or more processors 2010. The processor 2010 may support the apparatus 2000 to implement the method described in the above method embodiments. The processor 2010 may be a general-purpose processor or a dedicated-purpose processor. For example, the processor may be a central processing unit (CPU). Alternatively, the processor may be other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor; alternatively, the processor may be any conventional processor or the like.

The apparatus 2000 may further include one or more memories 2020. The memory 2020 stores a program thereon, which may be executed by the processor 2010, so as to cause the processor 2010 to perform the method described in the above method embodiments. The memory 2020 may be independent of the processor 2010 or may be integrated into the processor 2010.

The apparatus 2000 may further include a transceiver 2030. The processor 2010 may communicate with other devices or chips through the transceiver 2030. For example, the processor 2010 may transmit and receive data with other devices or chips by the transceiver 2030.

The embodiments of the present disclosure further provide a computer-readable storage medium for storing a program. The computer-readable storage medium may be applied to the terminal device or network device provided in the embodiments of the present disclosure, and the program causes the computer to perform the methods performed by the terminal device or the network device in various embodiments of the present disclosure.

The embodiments of the present disclosure further provide a computer program product. The computer program product includes a program. The computer program product may be applied to the terminal device or the network device provided in the embodiments of the present disclosure, and the program causes the computer to perform the methods performed by the terminal device or the network device in various embodiments of the present disclosure.

The embodiments of the present disclosure further provide a computer program. The computer program may be applied to the terminal device or the network device provided in the embodiments of the present disclosure, and the computer program causes the computer to perform the methods performed by the terminal device or the network device in various embodiments of the present disclosure.

It shall be understood that the terms "system" and "network" in the present disclosure may be used interchangeably. Furthermore, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. Furthermore, the terms "include/comprise," "has/having," and any variations thereof, are intended to cover a non-exclusive inclusion.

In the embodiments of the present disclosure, the "indicate/indicated/indicating/indication" mentioned may be a direct indication, an indirect indication, or may mean that there is an indication of an associated relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B may be determined based on A. However, it shall also be understood that determining B based on A does not mean determining B based on A only, and B may also be determined based on A and/or other information.

In the embodiments of the present disclosure, the term "correspond/corresponding/correspondence" may indicate a direct correspondence or an indirect correspondence between the two, or may mean that there is an association relationship between the two, or may mean a relationship of indicating and being indicated, or a relationship of configuring and being configured, or the like.

In the embodiments of the present disclosure, "pre-defined" or "pre-configured" may be achieved by pre-storing, in a device (for example, including the terminal device and the network device), a corresponding code, a table or other manner that may be used to indicate relevant information, and a specific implementation manner thereof is not limited in the present disclosure. For example, pre-defined may refer to being defined in a protocol.

In the embodiments of the present disclosure, the "protocol" may refer to a standard protocol in the communication field. For example, it may include an LTE protocol, an NR protocol, and a related protocol used in a future communication system, which is not limited in present disclosure.

In the embodiments of the present disclosure, the term "and/or" is merely an association relationship to describe associated objects, which indicates that three kinds of relationships may exist. For example, "A and/or B" may mean three cases as follows: A exists alone, both A and B exist, or B exists alone. A character "/" usually indicates that the associated objects before and after the "/" are in an "or" relationship.

In various embodiments of the present disclosure, values of serial numbers of the aforementioned processes do not mean an execution order. The execution order of each process shall be determined by its function and internal logic, and shall not impose any limitations on an implementation process of the embodiments of the present disclosure.

It shall be understood that the disclosed systems, apparatuses, and methods in several embodiments provided in the present disclosure may be implemented in other ways. For example, the apparatus embodiments described above are merely exemplary only.

For example, a division of units is merely a division based on logical functions while other division manners exist in an actual implementation. For example, a plurality of units or components may be combined or integrated into another system, or some characteristics may be omitted or skipped. In addition, the displayed or discussed mutual coupling, direct coupling or communicative connection through some ports, apparatuses, or units whether indirectly or communicatively by ways of electrical, mechanical, or other kinds of forms.

The units described as separating components may or may not be physically separated, and components as units for display may or may not be physical units, that is, located in a place or distributed on a plurality of network units. Some or all of the units may be selected according to actual needs to achieve the purpose of the solution of the embodiments.

Furthermore, various function units in various embodiments of the present disclosure may be integrated into a processing unit, physically independent, or integrated in one processing unit with two or more than two units.

All or some of the above embodiments may be implemented by software, hardware, firmware or any combination thereof. When implemented using software, all or some of embodiments may be implemented in a form as a computer program product. The computer program product includes one or more computer instructions. When the computer program instructions are loaded and executed on a computer, all or some processes or functions described in the embodiments of the present disclosure are generated. The computer may be a general-purpose computer, a dedicated-purpose computer, a computer network, or other programmable device. The computer instructions may be stored in a computer-readable storage medium. Alternatively, the computer instructions may be transmitted from a computer-readable storage medium to another computer-readable storage medium. For example, the computer instructions may be transmitted from a website, a computer, a server, or a data center to another website, another computer, another server, or another data center via a wired manner (e.g., a coaxial cable, optical fiber, a digital subscriber line (DSL)) or a wireless manner (e.g., an infrared or radio manner, microwave, etc.) . The computer-readable storage medium may be any available medium that can be read by a computer, or the computer-readable storage medium may be a data storage device such as the server or the data center that includes one or more available mediums. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description is only a specific implementation manner of the present disclosure, but the protection scope of the present disclosure is not limited thereto. Any person skilled in the art familiar with the technical field may easily think of changes or substitutions within the technical scope disclosed in the present disclosure, which shall be covered by the protection scope of the present disclosure. Therefore, the protection scope of the present disclosure shall be based on the protection scope of the claims.

**Claims**

1. A method for sidelink transmission, comprising:
transmitting, by a first terminal device, first information to a second terminal device, wherein the first information is associated with a first direct communication request (DCR), and the first information is transmitted simultaneously with one or more of:

   a first channel state information reference signal (CSI-RS); and
   first CSI-RS resource indication information.

2. The method according to claim 1, wherein the first information is one of:

   the first DCR; and
   response information for the first DCR.

3. The method according to claim 2, wherein in a case where the first information is the first DCR, the first information is transmitted simultaneously with both the first CSI-RS and the first CSI-RS resource indication information, and the first CSI-RS resource indication information is used for indicating the first CSI-RS.

4. The method according to claim 2, wherein in a case where the first information is the response information for the first DCR, the first information is transmitted simultaneously with the first CSI-RS resource indication information, wherein
the first CSI-RS resource indication information is used for indicating the first CSI-RS, and/or the first CSI-RS resource indication information is used by the second terminal device to determine a spatial domain transmission filter.

5. The method according to any one of claims 1 to 4, wherein the first information being transmitted simultaneously with the first CSI-RS resource indication information comprises one of:

   the first information and the first CSI-RS resource indication information being carried in a first physical sidelink shared channel (PSSCH); and
   the first information being carried in the first PSSCH, and the first CSI-RS resource indication information being carried in sidelink control information (SCI) associated with the first PSSCH.

6. The method according to any one of claims 1 to 4, wherein the first CSI-RS resource indication information is carried in sidelink control information (SCI) and/or a media access control element (MAC CE).

7. The method according to any one of claims 1 to 6, wherein the first DCR is transmitted by a transmitting device of the first DCR based on a first spatial domain transmission filter.

8. The method according to claim 7, wherein the first DCR is one of A DCRs transmitted by the transmitting device of the first DCR, the A DCRs are transmitted based on A spatial domain transmission filters, and the A spatial domain transmission filters are different spatial domain transmission filters, or the A spatial domain transmission filters are not same spatial domain transmission filters, wherein A is an integer greater than or equal to 1.

9. The method according to any one of claims 1 to 8, wherein the first DCR is received based on one of:

   a fixed spatial domain reception filter;
   a plurality of spatial domain reception filters supported by a receiving device of the first DCR; and
   an omni-direction antenna.

10. The method according to any one of claims 1 to 9, wherein response information for the first DCR comprises direct communication accept (DCA).

11. The method according to any one of claims 1 to 10, wherein response information for the first DCR is transmitted by a transmitting device of the response information for the first DCR based on a second spatial domain transmission filter.

12. The method according to claim 11, wherein the response information for the first DCR is one of pieces of response information for B DCRs transmitted by the transmitting device of the response information for the first DCR, the pieces of response information for the B DCRs are transmitted based on B spatial domain transmission filters, and the B spatial domain transmission filters are different spatial domain transmission filters, or the B spatial domain transmission filters are not same spatial domain transmission filters, wherein B is an integer greater than or equal to 1.

13. The method according to any one of claims 1 to 12, wherein transmission of response information for the first DCR is triggered based on a first condition, and the first condition is associated with one or more of:

> whether the first DCR is received; and
> a measurement result associated with the first DCR.

14. The method according to claim 13, wherein the first condition comprises one or more of:

> the first DCR being received by a receiving device of the first DCR;
> the first DCR being received by the receiving device of the first DCR, and the measurement result associated with the first DCR being greater than or equal to a first threshold; and
> the first DCR being received by the receiving device of the first DCR, and the measurement result associated with the first DCR being greater than or equal to a first measurement result, wherein
> the first measurement result is determined based on a measurement result corresponding to response information for a DCR that has been transmitted by a transmitting device of the response information for the first DCR.

15. The method according to claim 13 or 14, wherein the measurement result associated with the first DCR comprises one or more of reference signal received power (RSRP), and a signal to interference plus noise ratio (SINR).

16. The method according to any one of claims 13 to 15, wherein the measurement result associated with the first DCR is determined based on measurement of a first signal, and the first signal comprises one or more of:

> a physical sidelink control channel demodulation reference signal (PSCCH DMRS);
> a physical sidelink shared channel demodulation reference signal (PSSCH DMRS); and
> the first CSI-RS.

17. The method according to any one of claims 1 to 16, wherein the first CSI-RS is determined based on CSI-RS configuration information, and the CSI-RS configuration information is determined based on one or more of pre-configured information, configuration information from a network device, configuration information of a resource pool, and configuration information of a sidelink bandwidth part (BWP).

18. The method according to claim 17, wherein the CSI-RS configuration information is used for configuring a set of CSI-RS resources, the set of CSI-RS resources comprises C CSI-RS resources, a value of C is determined based on a number of spatial domain filters that a terminal device is capable of supporting, and C is an integer greater than or equal to 1.

19. The method according to any one of claims 1 to 18, wherein a sidelink transmission resource for transmitting response information for the first DCR is determined within a first time range.

20. The method according to claim 19, wherein a starting time of the first time range is determined based on one or more of:

> a time-domain unit where the first DCR is located; and
> a first time interval.

21. The method according to claim 20, wherein the first time interval is determined based on one of information pre-defined in a protocol, pre-configured information, and configuration information from a network device.

22. The method according to claim 20 or 21, wherein the first time interval is associated with a sidelink subcarrier spacing.

23. The method according to any one of claims 19 to 22, wherein an ending time or duration of the first time range is determined based on one of information pre-defined in a protocol, pre-configured information, and configuration information from a network device.

24. The method according to any one of claims 19 to 22, wherein a first sidelink transmission resource for transmitting the response information for the first DCR is determined based on configuration information, and the configuration information is used for indicating a latency boundary corresponding to the first sidelink transmission resource.

25. A method for sidelink transmission, comprising:
receiving, by a second terminal device, first information transmitted by a first terminal device, wherein the first information is associated with a first direct communication request (DCR), and the first information is transmitted simultaneously with one or more of:

> a first channel state information reference signal (CSI-RS); and
> first CSI-RS resource indication information.

26. The method according to claim 25, wherein the first information is one of:

> the first DCR; and
> response information for the first DCR.

**27.** The method according to claim 26, wherein in a case where the first information is the first DCR, the first information is transmitted simultaneously with both the first CSI-RS and the first CSI-RS resource indication information, and the first CSI-RS resource indication information is used for indicating the first CSI-RS.

**28.** The method according to claim 26, wherein in a case where the first information is the response information for the first DCR, the first information is transmitted simultaneously with the first CSI-RS resource indication information, wherein

the first CSI-RS resource indication information is used for indicating the first CSI-RS, and/or the first CSI-RS resource indication information is used by the second terminal device to determine a spatial domain transmission filter.

**29.** The method according to any one of claims 25 to 28, wherein the first information being transmitted simultaneously with the first CSI-RS resource indication information comprises one of:

the first information and the first CSI-RS resource indication information being carried in a first physical sidelink shared channel (PSSCH); and

the first information being carried in the first PSSCH, and the first CSI-RS resource indication information being carried in sidelink control information (SCI) associated with the first PSSCH.

**30.** The method according to any one of claims 25 to 28, wherein the first CSI-RS resource indication information is carried in sidelink control information (SCI) and/or a media access control element (MAC CE).

**31.** The method according to any one of claims 25 to 30, wherein the first DCR is transmitted by a transmitting device of the first DCR based on a first spatial domain transmission filter.

**32.** The method according to claim 31, wherein the first DCR is one of A DCRs transmitted by the transmitting device of the first DCR, the A DCRs are transmitted based on A spatial domain transmission filters, and the A spatial domain transmission filters are different spatial domain transmission filters, or the A spatial domain transmission filters are not same spatial domain transmission filters, wherein A is an integer greater than or equal to 1.

**33.** The method according to any one of claims 25 to 32, wherein the first DCR is received based on one of:

a fixed spatial domain reception filter;

a plurality of spatial domain reception filters supported by a receiving device of the first DCR; and
an omni-direction antenna.

**34.** The method according to any one of claims 25 to 33, wherein response information for the first DCR comprises direct communication accept (DCA).

**35.** The method according to any one of claims 25 to 34, wherein response information for the first DCR is transmitted by a transmitting device of the response information for the first DCR based on a second spatial domain transmission filter.

**36.** The method according to claim 35, wherein the response information for the first DCR is one of pieces of response information for B DCRs transmitted by the transmitting device of the response information for the first DCR, the pieces of response information for the B DCRs are transmitted based on B spatial domain transmission filters, and the B spatial domain transmission filters are different spatial domain transmission filters, or the B spatial domain transmission filters are not same spatial domain transmission filters, wherein B is an integer greater than or equal to 1.

**37.** The method according to any one of claims 25 to 36, wherein transmission of response information for the first DCR is triggered based on a first condition, and the first condition is associated with one or more of:

whether the first DCR is received; and
a measurement result associated with the first DCR .

**38.** The method according to claim 37, wherein the first condition comprises one or more of:

the first DCR being received by a receiving device of the first DCR;
the first DCR being received by the receiving device of the first DCR, and the measurement result associated with the first DCR being greater than or equal to a first threshold; and
the first DCR being received by the receiving device of the first DCR, and the measurement result associated with the first DCR being greater than or equal to a first measurement result, wherein
the first measurement result is determined based on a measurement result corresponding to response information for a DCR that has been transmitted by a transmitting device of the response information for the first DCR.

**39.** The method according to claim 37 or 38, wherein the measurement result associated with the first DCR comprises one or more of reference signal received power (RSRP), and a signal to interference plus noise ratio (SINR).

40. The method according to any one of claims 37 to 39, wherein the measurement result associated with the first DCR is determined based on measurement of a first signal, and the first signal comprises one or more of:

> a physical sidelink control channel demodulation reference signal (PSCCH DMRS);
> a physical sidelink shared channel demodulation reference signal (PSSCH DMRS); and
> the first CSI-RS.

41. The method according to any one of claims 25 to 40, wherein the first CSI-RS is determined based on CSI-RS configuration information, and the CSI-RS configuration information is determined based on one or more of pre-configured information, configuration information from a network device, configuration information of a resource pool, and configuration information of a sidelink bandwidth part (BWP).

42. The method according to claim 41, wherein the CSI-RS configuration information is used for configuring a set of CSI-RS resources, the set of CSI-RS resources comprises C CSI-RS resources, a value of C is determined based on a number of spatial domain filters that a terminal device is capable of supporting, and C is an integer greater than or equal to 1.

43. The method according to any one of claims 25 to 42, wherein a sidelink transmission resource for transmitting response information for the first DCR is determined within a first time range.

44. The method according to claim 43, wherein a starting time of the first time range is determined based on one or more of :

> a time-domain unit where the first DCR is located; and
> a first time interval.

45. The method according to claim 44, wherein the first time interval is determined based on one of information pre-defined in a protocol, pre-configured information, and configuration information from a network device.

46. The method according to claim 44 or 45, wherein the first time interval is associated with a sidelink subcarrier spacing.

47. The method according to any one of claims 43 to 46, wherein an ending time or duration of the first time range is determined based on one of information pre-defined in a protocol, pre-configured information, and configuration information from a network device.

48. The method according to any one of claims 43 to 46, wherein a first sidelink transmission resource for transmitting the response information for the first DCR is determined based on configuration information, and the configuration information is used for indicating a latency boundary corresponding to the first sidelink transmission resource.

49. A terminal device, being a first terminal device and comprising:
a transmitting unit used for transmitting first information to a second terminal device, wherein the first information is associated with a first direct communication request (DCR), and the first information is transmitted simultaneously with one or more of:

> a first channel state information reference signal (CSI-RS); and
> first CSI-RS resource indication information.

50. The terminal device according to claim 49, wherein the first information is one of:

> the first DCR; and
> response information for the first DCR.

51. The terminal device according to claim 50, wherein in a case where the first information is the first DCR, the first information is transmitted simultaneously with both the first CSI-RS and the first CSI-RS resource indication information, and the first CSI-RS resource indication information is used for indicating the first CSI-RS.

52. The terminal device according to claim 50, wherein in a case where the first information is the response information for the first DCR, the first information is transmitted simultaneously with the first CSI-RS resource indication information, wherein the first CSI-RS resource indication information is used for indicating the first CSI-RS, and/or the first CSI-RS resource indication information is used by the second terminal device to determine a spatial domain transmission filter.

53. The terminal device according to any one of claims 49 to 52, wherein the first information being transmitted simultaneously with the first CSI-RS resource indication information comprises one of:

> the first information and the first CSI-RS resource indication information being carried in a first physical sidelink shared channel (PSSCH); and

the first information being carried in the first PSSCH, and the first CSI-RS resource indication information being carried in sidelink control information (SCI) associated with the first PSSCH.

54. The terminal device according to any one of claims 49 to 52, wherein the first CSI-RS resource indication information is carried in sidelink control information (SCI) and/or a media access control element (MAC CE).

55. The terminal device according to any one of claims 49 to 54, wherein the first DCR is transmitted by a transmitting device of the first DCR based on a first spatial domain transmission filter.

56. The terminal device according to claim 55, wherein the first DCR is one of A DCRs transmitted by the transmitting device of the first DCR, the A DCRs are transmitted based on A spatial domain transmission filters, and the A spatial domain transmission filters are different spatial domain transmission filters, or the A spatial domain transmission filters are not same spatial domain transmission filters, wherein A is an integer greater than or equal to 1.

57. The terminal device according to any one of claims 49 to 56, wherein the first DCR is received based on one of:

a fixed spatial domain reception filter;
a plurality of spatial domain reception filters supported by a receiving device of the first DCR; and
an omni-direction antenna.

58. The terminal device according to any one of claims 49 to 57, wherein response information for the first DCR comprises direct communication accept (DCA).

59. The terminal device according to any one of claims 49 to 58, wherein response information for the first DCR is transmitted by a transmitting device of the response information for the first DCR based on a second spatial domain transmission filter.

60. The terminal device according to claim 59, wherein the response information for the first DCR is one of pieces of response information for B DCRs transmitted by the transmitting device of the response information for the first DCR, the pieces of response information for the B DCRs are transmitted based on B spatial domain transmission filters, and the B spatial domain transmission filters are different spatial domain transmission filters, or the B spatial domain transmission filters are not same spatial domain transmission filters, wherein B is an integer greater than or equal to 1.

61. The terminal device according to any one of claims 49 to 60, wherein transmission of response information for the first DCR is triggered based on a first condition, and the first condition is associated with one or more of:

whether the first DCR is received; and
a measurement result associated with the first DCR.

62. The terminal device according to claim 61, wherein the first condition comprises one or more of:

the first DCR being received by a receiving device of the first DCR;
the first DCR being received by the receiving device of the first DCR, and the measurement result associated with the first DCR being greater than or equal to a first threshold; and
the first DCR being received by the receiving device of the first DCR, and the measurement result associated with the first DCR being greater than or equal to a first measurement result, wherein
the first measurement result is determined based on a measurement result corresponding to response information for a DCR that has been transmitted by a transmitting device of the response information for the first DCR.

63. The terminal device according to claim 61 or 62, wherein the measurement result associated with the first DCR comprises one or more of reference signal received power (RSRP), and a signal to interference plus noise ratio (SINR).

64. The terminal device according to any one of claims 61 to 63, wherein the measurement result associated with the first DCR is determined based on measurement of a first signal, and the first signal comprises one or more of:

a physical sidelink control channel demodulation reference signal (PSCCH DMRS);
a physical sidelink shared channel demodulation reference signal (PSSCH DMRS); and
the first CSI-RS.

65. The terminal device according to any one of claims 49 to 64, wherein the first CSI-RS is determined based on CSI-RS configuration information, and the CSI-RS configuration information is determined based on one or more of: pre-configured information, configuration information from a network device, configuration information of a resource pool, and configuration information of a sidelink bandwidth part (BWP).

66. The terminal device according to claim 65, wherein the CSI-RS configuration information is used for configuring a set of CSI-RS resources, the set of CSI-RS resources comprises C CSI-RS resources, a value of C is determined based on a number of spatial domain filters that a terminal device is capable of supporting, and C is an integer greater than or equal to 1.

67. The terminal device according to any one of claims 49 to 66, wherein a sidelink transmission resource for transmitting response information for the first DCR is determined within a first time range.

68. The terminal device according to claim 67, wherein a starting time of the first time range is determined based on one or more of:

a time-domain unit where the first DCR is located; and
a first time interval.

69. The terminal device according to claim 68, wherein the first time interval is determined based on one of information pre-defined in a protocol, pre-configured information and configuration information from a network device.

70. The terminal device according to claim 68 or 69, wherein the first time interval is associated with a sidelink subcarrier spacing.

71. The terminal device according to any one of claims 67 to 70, wherein an ending time or duration of the first time range is determined based on one of information pre-defined in a protocol, pre-configured information, and configuration information from a network device.

72. The terminal device according to any one of claims 67 to 70, wherein a first sidelink transmission resource for transmitting the response information for the first DCR is determined based on configuration information, and the configuration information is used for indicating a latency boundary corresponding to the first sidelink transmission resource.

73. A terminal device, being a second terminal device and comprising:
a receiving unit used for receiving first information transmitted by a first terminal device, wherein the first information is associated with a first direct communication request (DCR), and the first information is transmitted simultaneously with one or more of:

a first channel state information reference signal (CSI-RS); and
first CSI-RS resource indication information.

74. The terminal device according to claim 73, wherein the first information is one of:

the first DCR; and
response information for the first DCR.

75. The terminal device according to claim 74, wherein in a case where the first information is the first DCR, the first information is transmitted simultaneously with both the first CSI-RS and the first CSI-RS resource indication information, and the first CSI-RS resource indication information is used for indicating the first CSI-RS.

76. The terminal device according to claim 74, wherein in a case where the first information is the response information for the first DCR, the first information is transmitted simultaneously with the first CSI-RS resource indication information, wherein
the first CSI-RS resource indication information is used for indicating the first CSI-RS, and/or the first CSI-RS resource indication information is used by the second terminal device to determine a spatial domain transmission filter.

77. The terminal device according to any one of claims 73 to 76, wherein the first information being transmitted simultaneously with the first CSI-RS resource indication information comprises one of:

the first information and the first CSI-RS resource indication information being carried in a first physical sidelink shared channel (PSSCH); and
the first information being carried in the first PSSCH, and the first CSI-RS resource indication information being carried in sidelink control information (SCI) associated with the first PSSCH.

78. The terminal device according to any one of claims 73 to 76, wherein the first CSI-RS resource indication information is carried in sidelink control information (SCI) and/or a media access control element (MAC CE).

79. The terminal device according to any one of claims 73 to 78, wherein the first DCR is transmitted by a transmitting device of the first DCR based on a first spatial domain transmission filter.

80. The terminal device according to claim 79, wherein the first DCR is one of A DCRs transmitted by the transmitting device of the first DCR, the A DCRs are transmitted based on A spatial domain transmission filters, and the A spatial domain transmission filters are different spatial domain transmission filters, or the A spatial domain transmission filters are not same spatial domain transmission filters, wherein A is an integer greater than or equal to 1.

81. The terminal device according to any one of claims 73 to 80, wherein the first DCR is received based on one of:

a fixed spatial domain reception filter;
a plurality of spatial domain reception filters supported by a receiving device of the first DCR; and
an omni-direction antenna.

82. The terminal device according to any one of claims 73 to 81, wherein response information for the first DCR comprises direct communication accept (DCA).

83. The terminal device according to any one of claims 73 to 82, wherein response information for the first DCR is transmitted by a transmitting device of the response information for the first DCR based on a second spatial domain transmission filter.

84. The terminal device according to claim 83, wherein the response information for the first DCR is one of pieces of response information for B DCRs transmitted by the transmitting device of the response information for the first DCR, the pieces of response information for the B DCRs are transmitted based on B spatial domain transmission filters, and the B spatial domain transmission filters are different spatial domain transmission filters, or the B spatial domain transmission filters are not same spatial domain transmission filters, wherein B is an integer greater than or equal to 1.

85. The terminal device according to any one of claims 73 to 84, wherein transmission of response information for the first DCR is triggered based on a first condition, and the first condition is associated with one or more of:

whether the first DCR is received; and
a measurement result associated with the first DCR.

86. The terminal device according to claim 85, wherein the first condition comprises one or more of:

the first DCR being received by a receiving device of the first DCR;

the first DCR being received by the receiving device of the first DCR, and the measurement result associated with the first DCR being greater than or equal to a first threshold; and
the first DCR being received by the receiving device of the first DCR, and the measurement result associated with the first DCR being greater than or equal to a first measurement result, wherein
the first measurement result is determined based on a measurement result corresponding to response information for a DCR that has been transmitted by a transmitting device of the response information for the first DCR.

87. The terminal device according to claim 85 or 86, wherein the measurement result associated with the first DCR comprises one or more of reference signal received power (RSRP), and a signal to interference plus noise ratio (SINR).

88. The terminal device according to any one of claims 85 to 87, wherein the measurement result associated with the first DCR is determined based on measurement of a first signal, and the first signal comprises one or more of:

a physical sidelink control channel demodulation reference signal (PSCCH DMRS);
a physical sidelink shared channel demodulation reference signal (PSSCH DMRS); and
the first CSI-RS.

89. The terminal device according to any one of claims 73-88, wherein the first CSI-RS is determined based on CSI-RS configuration information, and the CSI-RS configuration information is determined based on one or more of: pre-configured information, configuration information from a network device, configuration information of a resource pool, and configuration information of a sidelink bandwidth part (BWP).

90. The terminal device according to claim 89, wherein the CSI-RS configuration information is used for configuring a set of CSI-RS resources, the set of CSI-RS resources comprises C CSI-RS resources, a value of C is determined based on a number of spatial domain filters that a terminal device is capable of supporting, and C is an integer greater than or equal to 1.

91. The terminal device according to any one of claims 73 to 90, wherein a sidelink transmission resource for transmitting response information for the first DCR is determined within a first time range.

92. The terminal device according to claim 91, wherein a starting time of the first time range is determined based on one or more of:

a time-domain unit where the first DCR is located; and
a first time interval.

93. The terminal device according to claim 92, wherein the first time interval is determined based on one of information pre-defined in a protocol, pre-configured information, and configuration information from a network device.

94. The terminal device according to claim 92 or 93, wherein the first time interval is associated with a sidelink subcarrier spacing.

95. The terminal device according to any one of claims 91 to 94, wherein an ending time or duration of the first time range is determined based on one of information pre-defined in a protocol, pre-configured information, and configuration information from a network device.

96. The terminal device according to any one of claims 91 to 94, wherein a first sidelink transmission resource for transmitting the response information for the first DCR is determined based on configuration information, and the configuration information is used for indicating a latency boundary corresponding to the first sidelink transmission resource.

97. A terminal device, comprising a transceiver, a memory and a processor, wherein the memory is used for storing a program, and the processor is used for calling the program in the memory and controlling the transceiver to receive or transmit a signal, to cause the terminal to perform the method according to any one of claims 1 to 48.

98. An apparatus, comprising a processor for calling a program from a memory to cause the apparatus to perform the method according to any one of claims 1 to 48.

99. A chip, comprising a processor for calling a program from a memory to cause a device equipped with the chip to perform the method according to any one of claims 1 to 48.

100.
A computer-readable storage medium, storing a program thereon, and the program causes a computer to perform the method according to any one of claims 1 to 48.

101.
A computer program product, comprising a program, and the program causes a computer to perform the method according to any one of claims 1 to 48.

102.
A computer program, wherein the computer program causes a computer to perform the method according to any one of claims 1 to 48.

100

110

FIG. 1

110

120

120a   120a

Sidelink
communication

FIG. 2

110

120a Sidelink communication 120b

FIG. 3

120b Sidelink communication 120b

FIG. 4

**Communication group**

Terminal device 2

Terminal device 1

Terminal device 3

Terminal device 4

FIG. 5

Terminal device 2

Terminal device 6

Terminal device 3

**Terminal device 1**

Terminal device 5

Terminal device 4

FIG. 6

Terminal device 1          Terminal device 2

Unicast link

FIG. 7

| AGC | PSSCH | | | | | | | | | | GP |
|-----|-------|---|---|---|---|---|---|---|---|---|----|
| | PSCCH | | | | | | | | | | |

FIG. 8A

| AGC | PSSCH | | | | | | | | | GP | PSFCH | GP |
|-----|-------|---|---|---|---|---|---|---|---|----|-------|----|
| | PSCCH | | | | | | | | | | | |

FIG. 8B

EP 4 654 697 A1

Legend:
- Indicating a resource occupied by second-stage SCI
- Indicating a resource occupied by a PSSCH reference signal
- Indicating a resource occupied by a CSI-RS
- Indicating a resource occupied by AGC

FIG. 9

FIG. 10

1110

1111

1114

Time point 1

1112

Time point 2

1113

Time point 3

Time point 4

1

2

3

4

5

FIG. 11

RRC

N candidate TCI states

MAC

K activated TCI states

DCI

One or two used TCI states

FIG. 12

| Terminal device-1 | Terminal device-2 | Terminal device-3 | Terminal device-4 |
|---|---|---|---|
| S1320, V2X application layer provides application layer information for a PC5 unicast | S1310, Determines a target identifier of a Layer 2 to receive signaling | S1310, Determines the target identifier of the Layer 2 to receive the signaling | S1310, Determines the target identifier of the Layer 2 to receive the signaling |

S1330, DCR (Broadcast or unicast)

A) Process of establishing a Layer 2 link based on a target terminal device

S1340, Security establishment message

S1350, DCA information

S1360, Sidelink transmission on unicast link

B) Process of establishing a Layer 2 link based on a V2X service

S1340, Security establishment message

S1350, DCA information

S1340, Security establishment message

S1350, DCA information

S1360, Sidelink transmission on unicast link

S1360, Sidelink transmission on the unicast link

FIG. 13

First terminal device

Second terminal device

S1410, First information

FIG. 14

Terminal device X

Terminal device Y

Obtain CSI-RS configuration information — S1500

S1510, First DCR and first CSI-RS

S1520, Response information for the first DCR and first CSI-RS resource indication information

S1530, Sidelink transmission based on a transmit beam associated with the first CSI-RS resource indication information

FIG. 15

Terminal device Y

Omni-direction antenna

Beam 1

Beam 2

Omni-direction antenna

Sidelink transmission

DCR and CSI-RS0

DCR and CSI-RS1

DCR and CSI-RS2

DCR and CSI-RS3

Response information for the DCR and CSI-RS2 resource indication information

Omni-direction antenna

Terminal device X

Bea-m A

Bea-m B

Bea-m C

Bea-m D

Bea-m C

a    b    c    d         e         f         g    Slot

FIG. 16

FIG. 17

FIG. 18

Terminal device 1800

Transmitting unit 1810

FIG. 19

Terminal device 1900

Transmitting unit 1910

FIG. 20

Apparatus 2000

Processor 2010

memory 2020

transceiver 2030

## INTERNATIONAL SEARCH REPORT

| International application No. |
|---|
| **PCT/CN2023/072415** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNKI, 3GPP, CNTXT, ENTXTC, ENTXT, VEN: 信道状态信息, 直接通信请求, 侧行链路, 承载, 资源, 指示, CSI, DCR, RS, sidelink, carry, resource, indication

**C. DOCUMENTS CONSIDERED TO BE RELEVANT**

| Category* | Citation of document, with indication, where appropriate, of the relevant passages | Relevant to claim No. |
|---|---|---|
| X | WO 2021031048 A1 (HUAWEI TECHNOLOGIES CO., LTD.) 25 February 2021 (2021-02-25) description, pages 1-4 | 1-102 |
| A | CN 113875269 A (GUANGDONG OPPO MOBILE TELECOMMUNICATIONS CORP., LTD.) 31 December 2021 (2021-12-31) entire document | 1-102 |
| A | WO 2022018688 A1 (LENOVO (SINGAPORE) PTE. LTD.) 27 January 2022 (2022-01-27) entire document | 1-102 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2023** | **13 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/072415**

| Patent document cited in search report | | | Publication date (day/month/year) | Patent family member(s) | | | Publication date (day/month/year) |
|---|---|---|---|---|---|---|---|
| WO | 2021031048 | A1 | 25 February 2021 | None | | | |
| CN | 113875269 | A | 31 December 2021 | None | | | |
| WO | 2022018688 | A1 | 27 January 2022 | EP | 4186174 | A1 | 31 May 2023 |

Form PCT/ISA/210 (patent family annex) (July 2022)